# EUROPEAN PATENT SPECIFICATION

(11) **EP 4 497 681 B1**
(45) Date of publication and mention of the grant of the patent: **15.04.2026**
(21) Application number: 24190685.8
(22) Date of filing: 24.07.2024
(51) Int. Cl.: B64D 9/00, B32B 1/08, B32B 5/02, B32B 25/04, B32B 25/10, B65G 39/02, B32B 5/26, B32B 25/14, B32B 7/12

(54) **GUIDE ROLLER WITH ENHANCED CHIP, CUT, AND ABRASION RESISTANCE FOR CARGO DOORWAY ENTRANCE**
FÜHRUNGSROLLE MIT VERBESSERTER SPAN-, SCHNITT- UND ABRIEBFESTIGKEIT FÜR FRACHTTÜREINGANGSTÜR
ROULEAU DE GUIDAGE AVEC UNE RÉSISTANCE AMÉLIORÉE À LA COUPE ET À L'ABRASION POUR ENTRÉE DE PORTE DE CHARGEMENT

(30) Priority: 27.07.2023 IN 202341050783; 14.09.2023 US 202318467524
(43) Date of publication of application: 29.01.2025
(73) Proprietor: Goodrich Corporation, Charlotte, NC 28217-4578 (US)
(72) Inventor: VENKATESHAIAH, Harish, 560102 Bangalore, KA (IN); PATTABHIRAM, Abhiram N., 560037 Bangalore, KA (IN)
(74) Representative: Dehns

(56) References cited:
- WO-A1-2017/066548
- CN-U- 216 884 823
- US-A1- 2004 035 683

## Description

### CROSS-REFERENCE TO RELATED APPLICATIONS

This application claims priority to India Provisional Patent Application No. 202341050783, filed July 27, 2023, and titled "GUIDE ROLLER WITH ENHANCED CHIP, CUT, AND ABRASION RESISTANCE FOR CARGO DOORWAY ENTRANCE" and from US 18/467,524 filed on 14 September 2023.

### FIELD

The present disclosure relates to cargo handling systems, and more specifically, to a guide roller with enhanced chip, cut, and abrasion resistance for cargo doorway entrance

### BACKGROUND

Today's rapidly evolving and uncertain world has driven the need for increased flexibility and modularity into modern aircraft cargo handling systems. Typical cargo handling systems provide for the loading and unloading of unit load device (ULDs). During cargo loading and unloading, the ULDs regularly come in contact with doorway guide rollers and, which results in the guide rollers undergoing various types of impact loads by sharp, blunt portions of the ULDs. Such random and sudden loading patterns leads to irregular wear, tear, cutting, and chipping of the doorway guide roller materials which eventually reduces the durability of the guide rollers and subsequent failure of the guide roller. Cargo systems are disclosed in US 2004/035683 A1.

### SUMMARY

Disclosed herein is a guide roller for a cargo doorway of an aircraft as defined by claim 1.

In various embodiments, the at least one second layer of the first rubber wrapping compound disposed circumferentially around the second layer of the second rubber wrapping compound includes a second layer of left facing angle-biased calendered fabric disposed circumferentially around the second layer of the second rubber wrapping compound, a second layer of right facing angle-biased calendered fabric disposed circumferentially around the second layer of left facing angle-biased calendered fabric, and a second layer of straight calendered fabric disposed circumferentially around the second layer of right facing angle-biased calendered fabric.

In various embodiments, the at least one third layer of the second rubber wrapping compound disposed circumferentially around the at least one second layer of the first rubber wrapping compound includes a third layer of the second rubber wrapping compound disposed circumferentially around the at least one second layer of the first rubber wrapping compound, and a fourth layer of the second rubber wrapping compound disposed circumferentially around the third layer of the second rubber wrapping compound.

In various embodiments, prior to disposing the first layer of the second rubber wrapping compound circumferentially around the mandrel, the mandrel is coated with a primer and then coated with an adhesive.

In various embodiments, each of the first layer of the second rubber wrapping compound, the at least one first layer of the first rubber wrapping compound, the second layer of the second rubber wrapping compound, the at least one second layer of the first rubber wrapping compound, and the at least one third layer of the second rubber wrapping compound are consolidated prior to application to at least one of the mandrel or previous layer and to ensure no air is entrapped between layers.

In various embodiments, the guide roller further includes holes formed in each of the first layer of the second rubber wrapping compound, the at least one first layer of the first rubber wrapping compound, the second layer of the second rubber wrapping compound, the at least one second layer of the first rubber wrapping compound, and the at least one third layer of the second rubber wrapping compound as they are circumferentially wrapped for removal of entrapped air.

In various embodiments, the first layer of the second rubber wrapping compound, the second layer of the second rubber wrapping compound, and the at least one third layer of the second rubber wrapping compound comprise a hydrogenated nitrile rubber (HNBR) base polymer, a reinforcing filler, and at least one of antioxidants, fungicides, resins, plasticizers, accelerator activators, accelerators, or a magnesium carbonate treated and high oil treated version of sulfur, wherein the reinforcing filler is monolayer graphene with a particle size (platelet) of between 4 micrometers and 16 micrometers.

In various embodiments, the at least one first layer of the first rubber wrapping compound and the at least one second layer of the first rubber wrapping compound comprise a hydrogenated nitrile rubber (HNBR) as base polymer, a reinforcing filler, and at least one of antioxidants, resins, plasticizers, accelerator activators, accelerators, or a magnesium carbonate treated and high oil treated sulfur, wherein the reinforcing filler is monolayer graphene with a particle size (platelet) of between 4 micrometers and 16 micrometers.

In various embodiments, the guide roller further includes a bearing disposed in each end of the mandrel.

Also disclosed herein is a method of manufacturing a guide roller for a cargo doorway of an aircraft as defined by claim 9.

In various embodiments, disposing circumferentially the at least one second layer of the first rubber wrapping compound around the second layer of the second rubber wrapping compound includes disposing circumferentially a second layer of left facing angle-biased calendered fabric around the second layer of the second rubber wrapping compound, disposing circumferentially a second layer of right facing angle-biased calendered fabric around the second layer of left facing angle-biased calendered fabric, and disposing circumferentially a second layer of straight calendered fabric around the second layer of right facing angle-biased calendered fabric.

In various embodiments, disposing circumferentially the at least one third layer of the second rubber wrapping compound around the at least one second layer of the first rubber wrapping compound includes disposing circumferentially a third layer of the second rubber wrapping compound around the at least one second layer of the first rubber wrapping compound, and disposing circumferentially a fourth layer of the second rubber wrapping compound around the third layer of the second rubber wrapping compound.

In various embodiments, prior to disposing the first layer of the second rubber wrapping compound circumferentially around the mandrel, the mandrel is coated with a primer and then coated with an adhesive.

In various embodiments, the method further includes consolidating each of the first layer of the second rubber wrapping compound, the at least one first layer of the first rubber wrapping compound, the second layer of the second rubber wrapping compound, the at least one second layer of the first rubber wrapping compound, and the at least one third layer of the second rubber wrapping compound prior to application to at least one of the mandrel or previous layer.

In various embodiments, the method further includes forming holes in each of the first layer of the second rubber wrapping compound, the at least one first layer of the first rubber wrapping compound, the second layer of the second rubber wrapping compound, the at least one second layer of the first rubber wrapping compound, and the at least one third layer of the second rubber wrapping compound as they are circumferentially wrapped for removal of entrapped air.

In various embodiments, the first layer of the second rubber wrapping compound, the second layer of the second rubber wrapping compound, and the at least one third layer of the second rubber wrapping compound comprise a hydrogenated nitrile rubber (HNBR) base polymer, a reinforcing filler, and at least one of antioxidants, fungicides, resins, plasticizers, accelerator activators, accelerators, or a magnesium carbonate treated and high oil treated version of sulfur, wherein the reinforcing filler is monolayer graphene with a particle size (platelet) of between 4 micrometers and 16 micrometers.

In various embodiments, the at least one first layer of the first rubber wrapping compound and the at least one second layer of the first rubber wrapping compound comprise a hydrogenated nitrile rubber (HNBR) as base polymer, a reinforcing filler, and at least one of antioxidants, resins, plasticizers, accelerator activators, accelerators, or a magnesium carbonate treated and high oil treated sulfur, wherein the reinforcing filler is monolayer graphene with a particle size (platelet) of between 4 micrometers and 16 micrometers.

In various embodiments, the method further includes disposing a bearing disposed in each end of the mandrel.

The foregoing features and elements may be combined in any combination, without exclusivity, unless expressly indicated herein otherwise in the claims. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a schematic view of an aircraft being loaded with cargo, in accordance with various embodiments.
FIG. 1B illustrates a perspective view of an aircraft cargo compartment, in accordance with various embodiments.
FIG. 2 illustrates a flowchart of a four-roll calendering process for combining a first rubber wrapping compound with a fabric and preparing directional calendered fabric, in accordance with various embodiments.
FIGS. 3A and 3B illustrate a flowchart for manufacturing a layered guide roller, in accordance with various embodiments.
FIG. 4A illustrates a mandrel with a bearing slot coated with a primer and an adhesive, in accordance with various embodiments.
FIG. 4B illustrates a mandrel coated with a primer and an adhesive being wrapped with a first layer of second rubber wrapping compound, in accordance with various embodiments.
FIG. 4C illustrates a mandrel wrapped with a first layer of a second rubber wrapping compound being wrapped with a first layer of left facing angle-biased calendered fabric, in accordance with various embodiments.
FIG. 4D illustrates a mandrel wrapped with a first layer of left facing angle-biased calendered fabric being wrapped with a first layer of right facing angle-biased calendered fabric, in accordance with various embodiments.
FIG. 4E illustrates a mandrel wrapped with a first layer of right facing angle-biased calendered fabric being wrapped with a first layer of straight calendered fabric, in accordance with various embodiments.
FIG. 4F illustrates a mandrel wrapped with a first layer of straight calendered fabric being wrapped with second layer of the second rubber wrapping compound, in accordance with various embodiments.
FIG. 4G illustrates a completely wrapped guided roller, in accordance with various embodiments.
FIG. 5 illustrates a flowchart for manufacturing an injection molded guide roller, in accordance with various embodiments.
FIG. 6 illustrates an end of a mandrel with a bearing slot including a plurality of openings through which the rubber compound will be injected so as to provide a uniform injection process, in accordance with various embodiments.
FIG. 7 illustrates an end of a mandrel with a bearing slot including a plurality of openings through which the rubber compound will be injected so as to provide a uniform injection process, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the claims. Thus, the detailed description herein is presented for purposes of illustration only and not of limitation.

During cargo loading and unloading, the ULDs regularly come in contact with doorway guide rollers, which results in the guide rollers undergoing various types of impact loads through interactions with sharp, blunt portions of the ULDs. Such random and sudden loading patterns leads to irregular wear, tear, cutting, and chipping of the doorway guide roller materials which eventually reduces the durability of the guide rollers and subsequent failure of the guide roller.

Disclosed herein is a guide roller with enhanced chip, cut, and abrasion resistance for cargo doorway entrance. In various embodiments, to improve the durability and reliability of cargo doorway entrance guide roller, a set of material improvements and design changes are provided that include light weight polymer matrix composite materials including high-performance elastomer matrix and an ultra-light weight yet very high strength reinforcing graphene as filler material along with other rubber additives. In various embodiments, the composite material utilizes elastomers along with graphene to improve the material performance of guide rollers. In various embodiments. materials changes of the guide rollers designs are modified to enhance the life of the cargo doorway entrance guide roller.

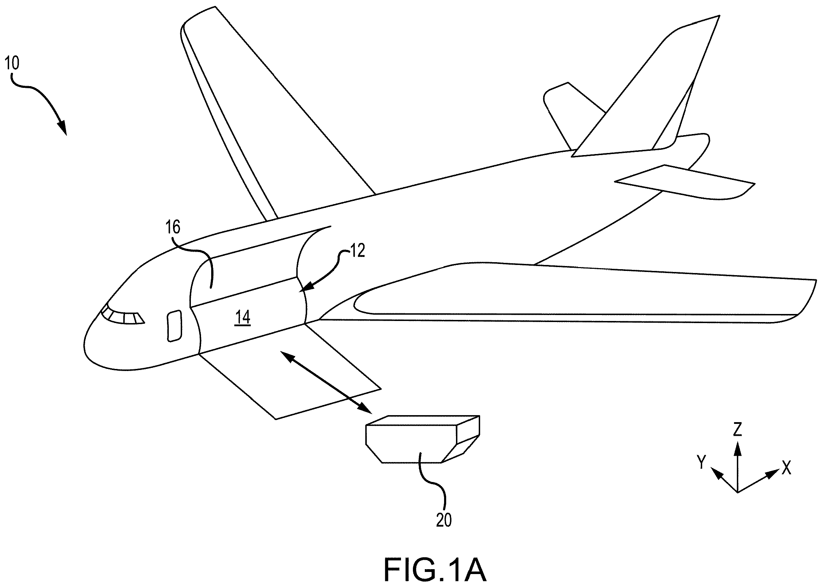

Referring now to FIG. 1A, a schematic view of an aircraft 10 having a cargo deck 12 located within a cargo compartment 14 is illustrated, in accordance with various embodiments. Aircraft 10 may comprise a cargo load door 16 located, for example, at one side of a fuselage structure of aircraft 10. A unit load device (ULD) 20, in the form of a container or pallet, for example, may be loaded through cargo load door 16 and onto cargo deck 12 of aircraft 10 or, conversely, unloaded from cargo deck 12 of aircraft 10. In general, ULDs are available in assorted sizes and capacities, and are typically standardized in dimension and shape. Once loaded with items destined for shipment, ULD 20 is transferred to aircraft 10 and then loaded onto aircraft 10 through cargo load door 16 using a conveyor ramp, scissor lift or the like. Once inside aircraft 10, ULD 20 is moved within cargo compartment 14 to a final stowed position. Multiple ULDs may be brought on-board the aircraft 10, with each ULD 20 being placed in a respective stowed position on cargo deck 12. After aircraft 10 has reached its destination, each ULD 20 is unloaded from aircraft 10 in similar fashion, but in reverse sequence to the loading procedure. To facilitate movement of ULD 20 along cargo deck 12, aircraft 10 may include a cargo handling system as described herein in accordance with various embodiments.

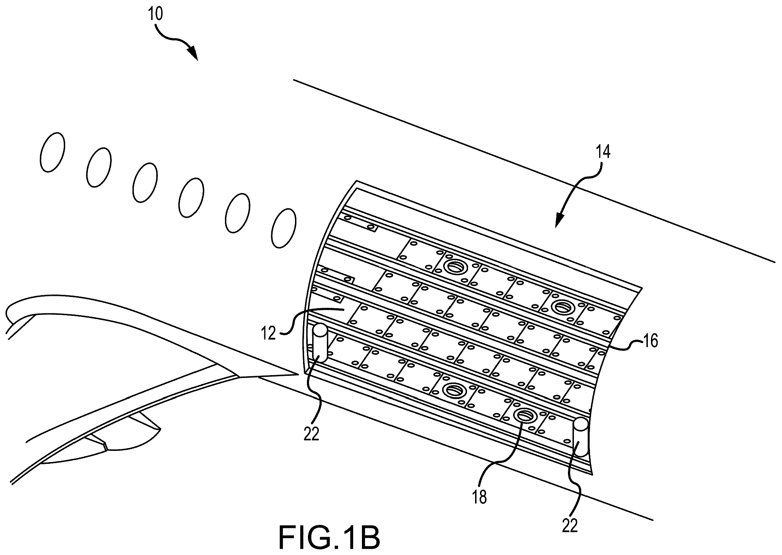

Referring now to FIG. 1B, in accordance with various embodiments a perspective view of an aircraft cargo compartment is illustrated. In various embodiments, the cargo load door 16 provides access to the cargo compartment 14 from outside the aircraft 10. In various embodiments, cargo (e.g., pallets or ULDs) may be loaded and unloaded through the cargo load door 16 and onto the cargo deck 12 of the aircraft 10. In various embodiments, as the cargo is loaded and unloaded through the cargo load door 16 and onto the cargo deck 12 of the aircraft 10, the cargo may regularly come in contact with doorway guide rollers 22 that are configured to guide the cargo onto of off of the cargo deck 12. In various embodiments, the cargo's regular contact with the doorway guide rollers 22 may result in the doorway guide rollers 22 undergoing various types of impact loads by sharp, blunt portions of the cargo. Such random and sudden loading patterns leads to irregular wear, tear, cutting, and chipping of the doorway guide rollers 22, which may eventually reduce the durability of the doorway guide rollers 22 and subsequent failure of the doorway guide rollers 22. In various embodiments, once the cargo is on the cargo deck 12, cargo compartment 14 may be equipped with one or more power drive units (PDUs) 18 configured to propel the cargo across cargo deck 12 in a desired direction.

In various embodiments, a doorway guide roller such as one of doorway guide rollers 22 of FIG. 1B, which is referred to simply as a guide roller hereafter, is provided with enhanced chip, cut, and abrasion resistance resulting in an improved guide roller. In various embodiments, the improved guide roller includes a set of material changes as well as a set of design changes for the rubber of the guide roller that improves the performance, durability, and reliability of the guide roller thereby extending the service life of the guide roller.

In various embodiments, the proposed material changes include the use of hydrogenated nitrile rubber (HNBR) and carboxylated nitrile rubber (XNBR) as polymer matrix materials that are compounded with graphene (single layer). In various embodiments, the graphene may have a particle size (platelet) of between 4 micrometers (157.5 microinches) and 16 micrometers (629.9 microinches). In various embodiments, the graphene may have a particle size (platelet) of between 7 micrometers (275.6 microinches) and 13 micrometers (511.8 microinches). In various embodiments, the graphene may have a particle size (platelet) of 10 micrometers (393.7 microinches).

In various embodiments, additional rubber compounding materials, i.e. additional rubber and/or synthetic rubber materials may be added to the polymer matrix materials and graphene. In various embodiments, these rubber compounds materials may be combined with various mandrel/roller designs to improve the performance, durability, and reliability of the guide roller.

In various embodiments, a benefit of using HNBR and XNBR polymer matrix materials is derived from the functional advantages of these polymer matrix materials in terms of excellent resistance against abrasion, higher resistance against cutting and chipping, improved bonding with metals, and ease of processing after compounding. In various embodiments, these polymer matrix materials, compounded with the rubber compounding materials, further enhances the resistance to cutting and chipping, provided by the graphene. In various embodiments, the graphene, due to its unique characteristics such as higher surface area, interacts with polymer matrix materials providing improved physical properties such as tensile strength, increased tear resistance, and enhanced resistance against cutting and chipping of rubber for the guide roller during usage.

In various embodiments, one or more rubber compounds may be generated for producing a first guide roller utilizing calendaring and wrapping over a mandrel. In various embodiments, a first rubber calendering compound, 'Compound A,' is produced. In various embodiments, the first rubber calendering compound starts with hydrogenated nitrile rubber (HNBR) as base polymer. In various embodiments, the HNBR may have an acrylonitrile content of between 24% and 44% with a Mooney viscosity of around 60 and 80 Mooney units (MU). In various embodiments, the HNBR may have an acrylonitrile content of between 29% and 39% with a Mooney viscosity of between 65 and 75 Mooney units (MU). In various embodiments, the HNBR has an acrylonitrile content of 34% with a Mooney viscosity of around 70 Mooney units (MU). In various embodiments, the residual double bond of the rubber (HNBR) may be between 1.5% and 9.5% for an effective sulfur curing to obtain sufficient cross link density. In various embodiments, the residual double bond of the rubber (HNBR) may be between 3.5% and 7.5% for an effective sulfur curing to obtain sufficient cross link density. In various embodiments, the residual double bond of the rubber (HNBR) is 5.5%, which is required for an effective sulfur curing to obtain sufficient cross link density. In various embodiments, the reinforcing filler is monolayer graphene with a particle size (platelet) of between 4 micrometers (157.5 microinches) and 16 micrometers (629.9 microinches). In various embodiments, the reinforcing filler is monolayer graphene with a particle size (platelet) of between 7 micrometers (275.6 microinches) and 13 micrometers (511.8 microinches). In various embodiments, the reinforcing filler is monolayer graphene with a particle size (platelet) of 10 micrometers (393.7 microinches). In various embodiments, other compounding ingredients included in the first rubber calendering compound may include antioxidants, resins, plasticizers, accelerator activators, accelerators, and/or a magnesium carbonate treated and high oil treated sulfur for improved dispersion in HNBR.

In various embodiments, the materials of the first rubber calendering compound may include: a base polymer or elastomer, such as hydrogenated nitrile rubber (HNBR); an accelerator activator, such as zinc oxide (ZnO); an accelerator activator, such as Stearic Acid; a reinforcing filler, such as graphene; an antioxidant, such as 4,4'-Bis(alpha,alphadimethylbenzyl)diphenylamine (CDPA); a plasticizer, such as tris (2-ethylhexyl) trimellitate (TOTM); a resin, such as phenol formaldehyde (PF) resin; a resin, such as coumarone indene (CI) resin; an accelerator, such as N,N-Dicyclohexyl-2-benzothiazolsulfene amide (DCBS); an accelerator-sulfur doner, such as tetra methyl thiuram disulfide (TMTD); and a high-oil treated sulfur, such as magnesium carbonate (MC) treated sulfur. In various embodiments, the HNBR may be between 80 to 120 parts per hundred. In various embodiments, the HNBR may be between 90 to 110 parts per hundred. In various embodiments, the HNBR may be 100 parts per hundred. In various embodiments, the ZnO may be between 1 to 9 parts per hundred. In various embodiments, the ZnO may be between 3 to 9 parts per hundred. In various embodiments, the ZnO may be 5 parts per hundred. In various embodiments, the Stearic Acid may be between .5 to 2.5 parts per hundred. In various embodiments, the Stearic Acid may be between 1 to 2 parts per hundred. In various embodiments, the Stearic Acid may be 1.5 parts per hundred. In various embodiments, the Graphene may be between 2 to 14 parts per hundred. In various embodiments, the Graphene may be between 5 to 11 parts per hundred. In various embodiments, the Graphene may be 8 parts per hundred. In various embodiments, the CDPA may be between 0.1 to 3.9 parts per hundred. In various embodiments, the CDPA may be between 1 to 3 parts per hundred. In various embodiments, the CDPA may be 2 parts per hundred. In various embodiments, the TOTM may be between 1 to 9 parts per hundred. In various embodiments, the TOTM may be between 3 to 7 parts per hundred. In various embodiments, the TOTM may be 5 parts per hundred. In various embodiments, the PF resin may be between 0.5 to 7.5 parts per hundred. In various embodiments, the PF resin may be between 3 to 6 parts per hundred. In various embodiments, the PF resin may be 4 parts per hundred. In various embodiments, the CI resin may be between 1 to 11 parts per hundred. In various embodiments, the CI resin may be between 4 to 8 parts per hundred. In various embodiments, the CI resin may be 6 parts per hundred. In various embodiments, the DCBS may be between 0.5 to 1.9 parts per hundred. In various embodiments, the DCBS may be between 1 to 1.4 parts per hundred. In various embodiments, the DCBS may be 1.2 parts per hundred. In various embodiments, the TMTD may be between 0.5 to 1.9 parts per hundred. In various embodiments, the TMTD may be between 1 to 1.4 parts per hundred. In various embodiments, the TMTD may be 1.2 parts per hundred. In various embodiments, the MC treated sulfur may be between 0.2 to 1.6 parts per hundred. In various embodiments, the MC treated sulfur may be between 0.6 to 1.3 parts per hundred. In various embodiments, the MC treated sulfur may be 0.9 parts per hundred.

In various embodiments, the materials of the first rubber calendering compound may be mixed in two stages. In various embodiments, stage 1, which may be referred to as a master batch, includes the base polymer or elastomer along with reinforcing fillers, accelerator activators, resins, plasticizers, and anti-oxidants. In various embodiments, the master batch is blended in an internal mixer with intermeshing type rotors. In various embodiments, the intermeshing internal mixer provides high shear blending or mixing to ensure a uniform material mix through high dispersion and distributive mixing actions with better temperature control of the compound.

In various embodiments, in a first step of preparing the master batch, rubber, i.e. the HNBR or XNBR, is added to a mixer and is mixed or masticated for approximately 10-30 seconds at a speed of between approximately 20-45 revolutions per minutes (rpm) under a ram down condition. A ram is a part of the mixer and a ram down condition is when the ram is in down condition. In various embodiments, in a second step, a reinforcing filler, i.e. the graphene, is added to the mixer and is mixed for approximately 10-45 seconds at a speed of approximately 10-40 rpm under the ram down condition. In various embodiments, in a third step, the remaining ingredients, such as ZnO, Stearic Acid, PF Resin, CI Resin, CDPA, or TOTM are added to the mixer and are mixed at approximately 40 rpm under the ram down condition until the rubber temperature reaches a temperature of 145-160°C (293 - 320 degrees Fahrenheit).

In various embodiments, the master batch mixing may be utilized not only for the first rubber calendering compound but for other compounds described hereafter. Accordingly, in various embodiments, only the materials specific to the rubber compound being produced at the time are added to the master batch. In various embodiments, in a first stage, i.e. the master batch stage, an intermeshing type internal mixer with a fill factor of up to between 65% and 70% is utilized. After completion of incorporation of all ingredients into master batch, the first rubber calendering compound is mixed until the rubber attains at temperature of between 145°C (293 degrees Fahrenheit) to 160°C (320 degrees Fahrenheit). In various embodiments, first rubber calendering compound is transferred to a two-roll mill, which forms the first rubber calendering compound into sheets. In various embodiments, the sheets of the first rubber calendering compound are dipped in a soap oil solution to avoid sticking to each other and stacked. In various embodiments, the stacked sheets of first rubber calendering compound are then stored at room temperature for a minimum period, i.e. approximately 24 hours. In various embodiments, during the storage, any undispersed or unevenly distributed rubber additives will distribute evenly in the rubber matrix.

In various embodiments, in a first step of preparing the final batch, the master batch rubber is added to a two-roll mill to ensure the rubber has reached a predetermined temperature. Once the master batch rubber has met the predetermined temperature, the master batch rubber is fed into a two-roll mill with an opening of a first dimension and multiple cuts are made on the rubber to make sure rubber warms up quickly and attains a smooth-running rolling band at the roll nips. In various embodiments, in a second step, the nip gap of the two-roll mill is closed to a second dimension, accelerators, i.e. DCBS or TMTD, are added to a two-roll mill, and multiple cuts are made to the rubber to make sure added ingredients are properly dispersed. In various embodiments, at a third step, the nip gap of the two-roll mill is closed to a third dimension, curing or cross-linking agents, i.e. MC treated sulfur, are added, and multiple cuts are made to the rubber to make sure added ingredient is properly dispersed. In various embodiments, the nip gap of the two-roll mill is opened to a further dimension and sheet out the rubber.

In various embodiments, a friction ratio of the two-roll mill may be 1:1.25 as such a friction ratio is sufficient for better shear forces on the rubber to ensure proper dispersion of the cure additives. In various embodiments, rolls of the two-roll mill have drilled holes for water circulation to maintain the roll temperatures at 28±2°C (35.6 degrees Fahrenheit). In various embodiments, continuous water circulation is required for the entire final compound mixing duration to ensure the roll temperatures are not above 30°C (86 degrees Fahrenheit). In various embodiments, the rubber temperature of the final batch should not be allowed to go more than 100-105°C. In various embodiments, the final batch of the first rubber calendering compound is allowed to stand at room temperature for approximately 24 hours to ensure proper dispersion and distribution of added curatives. After the standing time, the first rubber calendering compound is ready for further calendaring to form a first rubber wrapping compound.

In various embodiments, a second rubber wrapping compound, 'Compound B,' is produced. In various embodiments, the second rubber wrapping compound, which is utilized for wrapping on the first rubber wrapping compound, is also formulated with the hydrogenated nitrile rubber (HNBR) as base polymer. In that regard, a same HNBR rubber which was used for the first rubber wrapping compound, i.e. the calendering compound, is also utilized for the second rubber wrapping compound. In various embodiments, the reinforcing filler is monolayer graphene with a particle size (platelet) of between 4 micrometers (157.5 microinches) and 16 micrometers (629.9 microinches). In various embodiments, the reinforcing filler is monolayer graphene with a particle size (platelet) of between 7 micrometers (275.6 microinches) and 13 micrometers (511.8 microinches). In various embodiments, the reinforcing filler is monolayer graphene with a particle size (platelet) of 10 micrometers (393.7 microinches). In various embodiments, other compounding ingredients included in the second rubber wrapping compound may include antioxidants, fungicides, resins, plasticizers, accelerator activators, accelerators, and/or a magnesium carbonate treated and high oil treated version of sulfur for improved dispersion in HNBR.

In various embodiments, the materials of the second rubber wrapping compound may include: a base polymer or elastomer, such as hydrogenated nitrile rubber (HNBR); an accelerator activator, such as zinc oxide (ZnO); a reinforcing filler, such as graphene; an antiozonant, such as microcrystalline (MC) wax; an antioxidant, such as 4,4'-Bis(alpha,alpha-dimethylbenzyl)diphenylamine (CDPA); a plasticizer, such as tris (2-ethylhexyl) trimellitate (TOTM); a resin, such as phenol formaldehyde (PF) resin; a fungicide additive; an accelerator, such as N,N-Dicyclohexyl-2-benzothiazolsulfene amide (DCBS); an accelerator-sulfur doner, such as tetra methyl thiuram disulfide (TMTD); and a high-oil treated sulfur, such as magnesium carbonate (MC) treated sulfur. In various embodiments, the HNBR may be between 80 to 120 parts per hundred. In various embodiments, the HNBR may be between 90 to 110 parts per hundred. In various embodiments, the HNBR may be 100 parts per hundred. In various embodiments, the ZnO may be between 1 to 9 parts per hundred. In various embodiments, the ZnO may be between 3 to 9 parts per hundred. In various embodiments, the ZnO may be 5 parts per hundred. In various embodiments, the Stearic Acid may be between .5 to 2.5 parts per hundred. In various embodiments, the Stearic Acid may be between 1 to 2 parts per hundred. In various embodiments, the Stearic Acid may be 1.5 parts per hundred. In various embodiments, the Graphene may be between 2 to 14 parts per hundred. In various embodiments, the Graphene may be between 5 to 11 parts per hundred. In various embodiments, the Graphene may be 8 parts per hundred. In various embodiments, the MC wax may be between 0.5 to 3.5 parts per hundred. In various embodiments, the MC wax may be between 1 to 3 parts per hundred. In various embodiments, the MC wax may be 2 parts per hundred. In various embodiments, the CDPA may be between 0.4 to 2.4 parts per hundred. In various embodiments, the CDPA may be between .9 to 1.9 parts per hundred. In various embodiments, the CDPA may be 1.4 parts per hundred. In various embodiments, the TOTM may be between 1 to 9 parts per hundred. In various embodiments, the TOTM may be between 3 to 7 parts per hundred. In various embodiments, the TOTM may be 5 parts per hundred. In various embodiments, the PF resin may be between 2 to 7 parts per hundred. In various embodiments, the PF resin may be between 3 to 6 parts per hundred. In various embodiments, the PF resin may be 4 parts per hundred. In various embodiments, the Fungicide may be between 0.1 to 0.9 parts per hundred. In various embodiments, the Fungicide may be between 0.3 to 0.7 parts per hundred. In various embodiments, the Fungicide may be 0.5 parts per hundred. In various embodiments, the DCBS may be between 0.1 to 1.9 parts per hundred. In various embodiments, the DCBS may be between .5 to 1.5 parts per hundred. In various embodiments, the DCBS may be 1 parts per hundred. In various embodiments, the TMTD may be between 0.5 to 1.9 parts per hundred. In various embodiments, the TMTD may be between 1 to 1.4 parts per hundred. In various embodiments, the TMTD may be 1.2 parts per hundred. In various embodiments, the MC treated sulfur may be between 0.1 to 0.7 parts per hundred. In various embodiments, the MC treated sulfur may be between 0.3 to 0.5 parts per hundred. In various embodiments, the MC treated sulfur may be 0.4 parts per hundred.

In various embodiments, the formulation for the second rubber wrapping compound provided in Table 4 may be mixed in two stages. In various embodiments, stage 1, which may be referred to as a master batch, includes the base polymer or elastomer along with reinforcing fillers, accelerator activators, resins, plasticizers, fungicides, anti-ozonants, and anti-oxidants. In various embodiments, mixing of the master batch of the second rubber wrapping compound utilizes an internal mixer with intermeshing type rotors and is mixed in a similar manner to stage 1 of the first rubber calendering compound. In various embodiments, mixing of the final batch of the second rubber wrapping compound utilizes a two-roll mill in a similar manner to stage 2 of the first rubber calendering compound. In various embodiments, the order that materials are added to the master batch of the second rubber wrapping compound and a mixing action that is performed as each material is added is provided with regard to Compound 'A' described previously. In various embodiments, the order that materials are added to the final batch of the second rubber wrapping compound and a mixing action that is performed as each material is added is provided with regard to Compound 'A' described previously. In various embodiments, the rubber temperature of the final batch should not be allowed to go more than 100-105°C. In various embodiments, the maturation or aging of the master batch of the second rubber wrapping compound and final batch of the second rubber wrapping compound is approximately 24 hours at each stage.

In various embodiments, in order to manufacture a guide roller utilizing the first rubber calendering compound and the second rubber wrapping compound, the first rubber calendering compound may be further calendered with a fabric. In various embodiments, a fabric with polycaprolactam cords having a denier construction of 1260/2 may be selected because of its advantages such as high strength, high impact resistance, good fatigue resistance, and good adhesion properties. In various embodiments, a two-yarn construction with a 1260 denier is sufficient for the guide roller application. In various embodiments, the calendered fabric may be manufactured by coating the first rubber calendering compound onto a Resorcinol Formaldehyde Latex (RFL) dipped polycaprolactam fabric. In various embodiments, RFL dipping of polycaprolactam fabric improves the bonding with coating or calendaring rubber compound. In various embodiments, the calendering process may utilize a four-roll calendar so that the first rubber calendering compound is applied on both sides of the RFL dipped fabric.

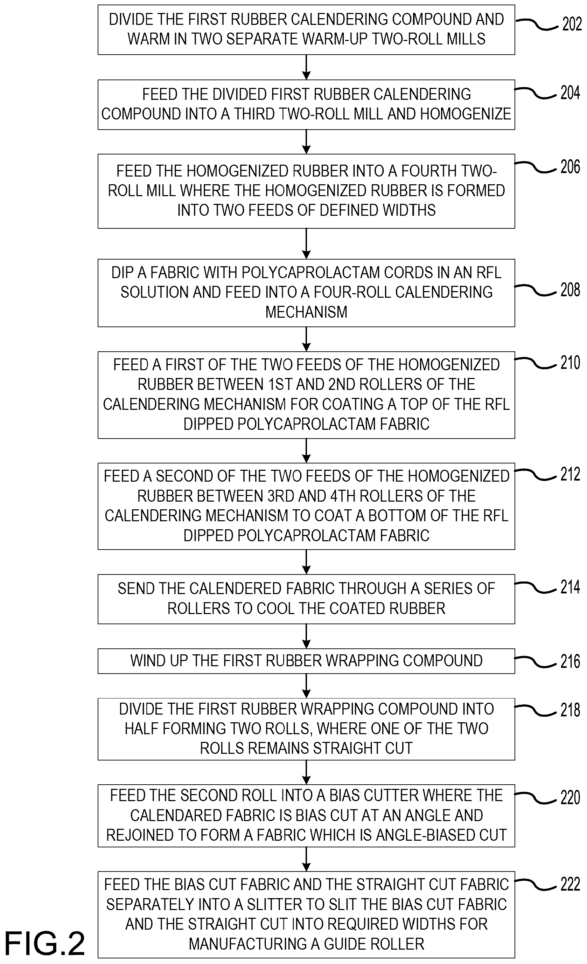

Referring to FIG. 2, a flowchart of a four-roll calendering process for combining a first rubber calendering compound with a fabric and preparing directional calendered fabric is illustrated, in accordance with various embodiments. At block 202, the first rubber calendering compound is divided in two and warmed in two separate warm-up two-roll mills. In various embodiments, one or more rollers of the two-roll mills may be knurled. In various embodiments, at least one of the two-roll mills may process the first rubber calendering compound utilizing back rolling. At block 204, after warming, the first rubber calendering compound is fed from the two separate two-roll mills into a third two-roll mill and is homogenized. In various embodiments, the third two-roll mill may be a homogenizing mill with smooth rollers where the warmed first rubber calendering compound is homogenized. At block 206, the homogenized rubber is fed into a fourth two-roll mill called a feed mill with smooth rollers where the homogenized rubber is formed into two feeds of defined widths. At block 208, a fabric with polycaprolactam cords is dipped in a Resorcinol Formaldehyde Latex (RFL) solution and fed into a four-roll calendering mechanism. At block 210, a first of the two feeds of the homogenized rubber is fed between the 1st and 2nd rollers of the calendering mechanism for coating a top of the RFL dipped polycaprolactam fabric and, at block 212, a second of the two feeds of the homogenized rubber is fed between the 3rd and 4th rollers of the calendering mechanism to coat a bottom of the RFL dipped polycaprolactam fabric. At block 214, once both sides of the RFL dipped polycaprolactam fabric are coated, the calendered fabric is sent through a series of rollers that are tensioned to cool the coated rubber. At block 216, the calendered rubber, hereinafter referred to as the first rubber wrapping compound, is wound. At block 218, the first rubber wrapping compound is divided into half and formed into two rolls, where one of the two rolls remains straight, i.e. without any bias cutting. At block 220, the other roll is fed into a bias cutter where the first rubber wrapping compound is bias cut at an angle the x-axis and the y-axis and rejoined to form a fabric which is angle-biased cut. In various embodiment, the angle-biased cut may be between 30° and 60°. In various embodiment, the angle-biased cut may be between 40° and 50°. In various embodiment, the angle-biased cut may be 45°. At block 222, the angle-biased cut fabric as well as the straight fabric are separately fed into a slitter where the angle-biased cut fabric and the straight fabric is slit into the required widths for manufacturing a guide roller. In various embodiments, the slitter may utilize a circular knife blade.

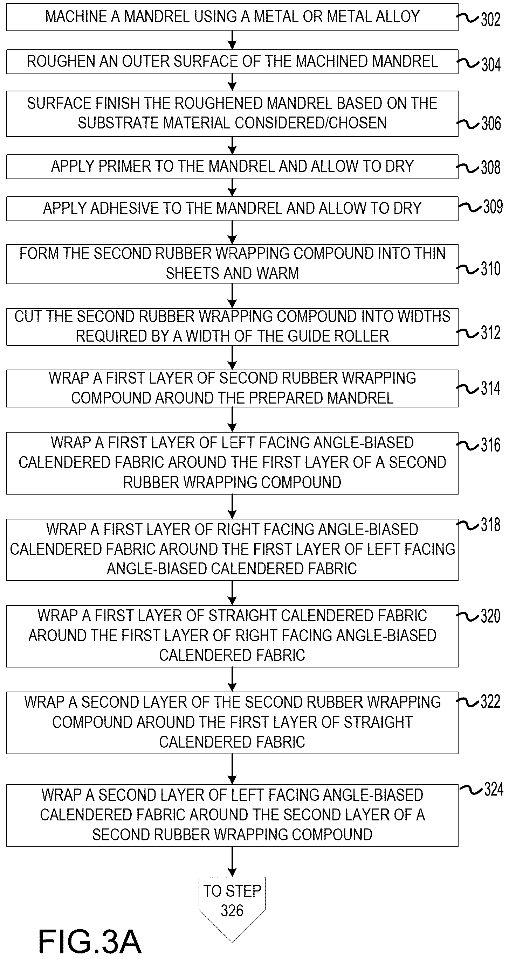

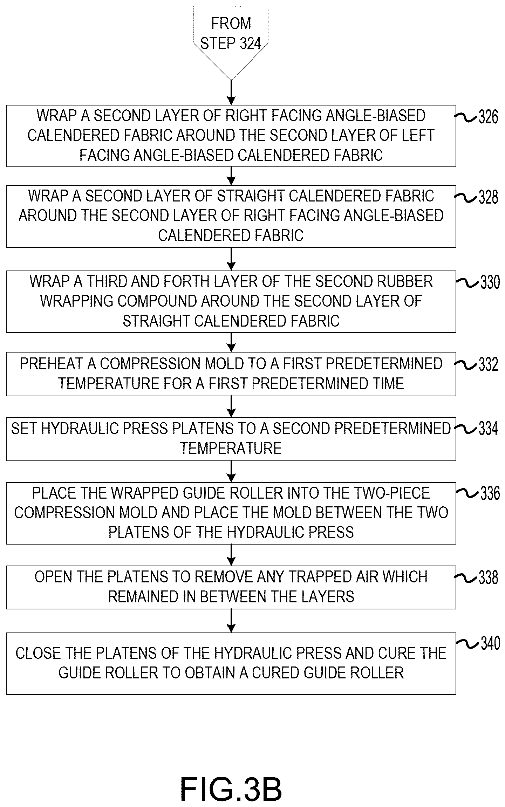

Referring to FIG. 3, a flowchart for manufacturing a layered guide roller is illustrated, in accordance with the claims. At block 302, a mandrel of a first circumference is machined using a metal or metal alloy. In various embodiments, the machining may include forming bearing slots for housing the bearings on which the guide roller will rotate. In various embodiments, the metal or metal alloy may be stainless steel, brass, or aluminum, among others. At block 304, the outer surface of the machined mandrel is roughened, i.e. through grit blasting. At block 306, the roughened mandrel is then surface finished based on the substrate material considered/chosen. In various embodiments, metal portions of the mandrel may undergo chemical treatments to reduce corrosion. In various embodiments, a surface coating for corrosion protection for Aluminum may be an anodize or chemical conversion coating and for brass may be an electroplated zinc coating.

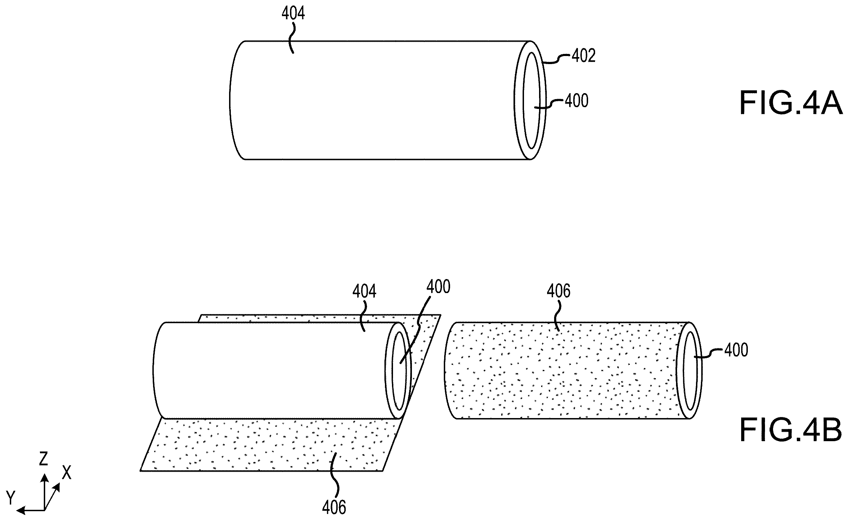

In various embodiments, bonding between the roughened mandrel and the second rubber wrapping compound may be enhanced via a primer and an adhesive. In various embodiments, the primer may be a rubber-to-substrate primer, such as Chemlok^{®} 205 primer and the adhesive may be a rubber-to-substrate adhesive, such as Chemlok^{®} 250 adhesive. At block 308, the primer is applied to the mandrel and allowed to dry and then, at block 309, the adhesive is applied to the mandrel and allowed to dry in a dust free environment to avoid any surface contamination. With temporary reference to FIG. 4A, a mandrel 400 with bearing slot 402 is coated with a primer and an adhesive 404 is illustrated, in accordance with various embodiments.

At block 310, the second rubber wrapping compound is formed into thin sheets of thickness around 2 mm (0.07874 inch) using a two-roll mill in which the second rubber wrapping compound may be warmed up by giving sufficient cuts. At block 312, once the second rubber wrapping compound is warmed up and formed out in a sheet form, the second rubber wrapping compound is cut into widths in accordance with a width of the guide roller. At block 314, a first layer of second rubber wrapping compound is circumferentially wrapped around the prepared mandrel. In various embodiments, the applied first layer of second rubber wrapping compound is consolidated using a hand stitcher or knurled roller to make sure the first layer of second rubber wrapping compound is sticking to the mandrel and little to no air is entrapped between mandrel and the first layer of second rubber wrapping compound. Additionally, in various embodiments, holes may be made (e.g., using pins or needles) in the first layer of second rubber wrapping compound for removal of entrapped air which will escape during the curing process. With temporary reference to FIG. 4B, a mandrel 400 coated with a primer and an adhesive 404 being wrapped with a first layer of second rubber wrapping compound 406 is illustrated, in accordance with various embodiments.

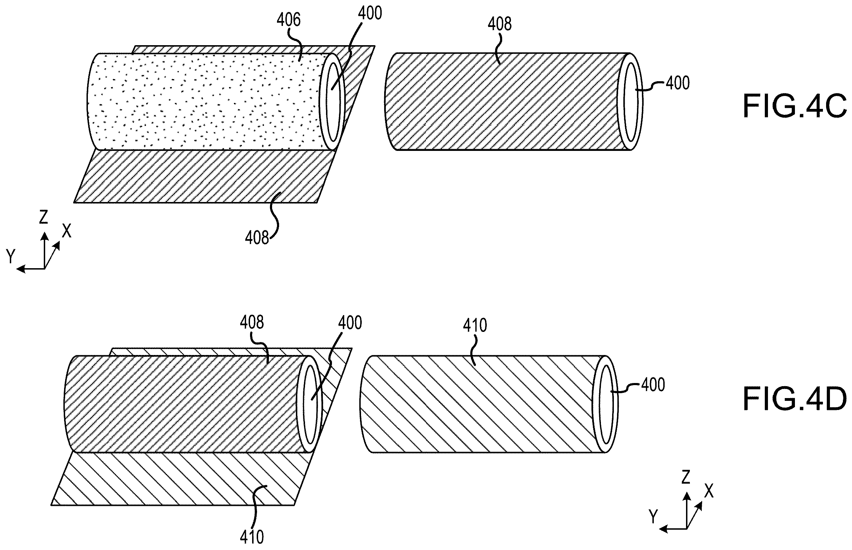

At block 316, a first layer of the angle-biased calendered fabric facing left is circumferentially wrapped around the first layer of a second rubber wrapping compound. In various embodiments, the applied first layer of left facing angle-biased calendered fabric is consolidated using a hand stitcher or knurled roller to make sure the first layer of left facing angle-biased calendered fabric is sticking to the first layer of second rubber wrapping compound and no air is entrapped between the first layer of second rubber wrapping compound and the first layer of left facing angle-biased calendered fabric. Additionally, in various embodiments, holes may be made (e.g., using pins or needles) in the first layer of left facing angle-biased calendered fabric for removal of entrapped air which will escape during curing process. With temporary reference to FIG. 4C, a mandrel 400 wrapped with a first layer of a second rubber wrapping compound 406 being wrapped with a first layer of left facing angle-biased calendered fabric 408 is illustrated, in accordance with various embodiments. In various embodiments, the splice joint of the first layer of left facing angle-biased calendered fabric is positioned 30-40° away from the splice of the first layer of second rubber wrapping compound.

At block 318, a first layer of right facing angle-biased calendered fabric is circumferentially wrapped around the first layer of left facing angle-biased calendered fabric. In various embodiments, the first layer of right facing angle-biased calendered fabric is consolidated using a hand stitcher or knurled roller to make sure the first layer of right facing angle-biased calendered fabric is sticking to the first layer of left facing angle-biased calendered fabric and no air is entrapped between the first layer of left facing angle-biased calendered fabric and the first layer of right facing angle-biased calendered fabric. Additionally, in various embodiments, holes (e.g., using pins or needles) may be made in the first layer of right facing angle-biased calendered fabric layer for removal of entrapped air which will escape during the curing process. With temporary reference to FIG. 4D, a mandrel 400 wrapped with a first layer of left facing angle-biased calendered fabric 408 being wrapped with a first layer of right facing angle-biased calendered fabric 410 is illustrated, in accordance with various embodiments. In various embodiments, the splice joint of the first layer of right facing angle-biased calendered fabric layer is positioned 30-40° away from the splice of the first layer of left facing angle-biased calendered fabric layer.

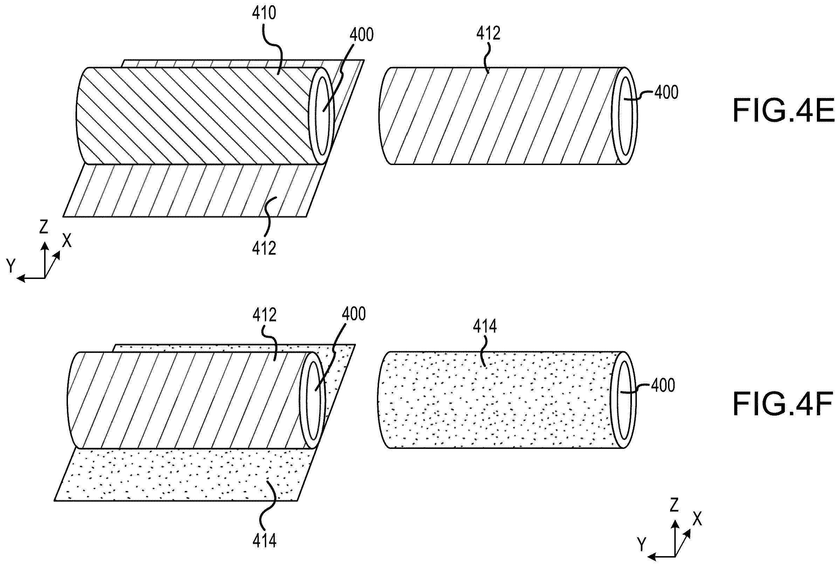

At block 320, a first layer of straight calendered fabric is circumferentially wrapped around the first layer of right facing angle-biased calendered fabric. In various embodiments, the first layer of straight calendered fabric is consolidated using a hand stitcher or knurled roller to make sure the first layer of straight calendered fabric is sticking to the first layer of right facing angle-biased calendered fabric and little to no air is entrapped between the first layer of right facing angle-biased calendered fabric and the first layer of straight calendered fabric. Additionally, in various embodiments, holes may be made (e.g., using pins or needles) in the first layer of straight calendered fabric for removal of entrapped air which will escape during curing process. With temporary reference to FIG. 4E, a mandrel 400 wrapped with a first layer of right facing angle-biased calendered fabric 410 being wrapped with a first layer of straight calendered fabric 412 is illustrated, in accordance with various embodiments. In various embodiments, the splice joint of the first layer of straight calendered fabric is positioned 30-40° away from the splice of the first layer of right facing angle-biased calendered fabric.

At block 322, a second layer of the second rubber wrapping compound is circumferentially wrapped around the first layer of straight calendered fabric. In various embodiments, the second layer of the second rubber wrapping compound is consolidated using a hand stitcher or knurled roller to make sure the second layer of the second rubber wrapping compound is sticking to the first layer of straight calendered fabric and no air is entrapped between the first layer of straight calendered fabric and the second layer of the second rubber wrapping compound. Additionally, in various embodiments, holes may be made (e.g., using pins or needles) in the second layer of the second rubber wrapping compound for removal of any entrapped air which will escape during curing process. With temporary reference to FIG. **4F****,** a mandrel 400 wrapped with a first layer of straight calendered fabric 412 being wrapped with second layer of the second rubber wrapping compound 414 is illustrated, in accordance with various embodiments. In various embodiments, the splice joint of the second layer of the second rubber wrapping compound is positioned 30-40° away from the splice of first layer of straight calendered fabric.

At block 324, a second layer of the angle-biased calendered fabric facing left is circumferentially wrapped around the second layer of a second rubber wrapping compound. In various embodiments, the second layer of left facing angle-biased calendered fabric is consolidated using a hand stitcher or knurled roller to make sure the second layer of left facing angle-biased calendered fabric is sticking to the second layer of second rubber wrapping compound layer and no air is entrapped between the second layer of second rubber wrapping compound and the second layer of left facing angle-biased calendered fabric. Additionally, in various embodiments, holes may be made (e.g., using pins or needles) in the second layer of left facing angle-biased calendered fabric for removal of any entrapped air which will escape during curing process. In various embodiments, the splice joint of the second layer of left facing angle-biased calendered fabric is positioned 30-40° away from the splice of the second layer of second rubber wrapping compound.

At block 326, a second layer of layer of the angle-biased calendered fabric facing right is circumferentially wrapped around the second layer of left facing angle-biased calendered fabric. In various embodiments, the second layer of right facing angle-biased calendered fabric is consolidated using a hand stitcher or knurled roller to make sure the second layer of right facing angle-biased calendered fabric is sticking to the second layer of left facing angle-biased calendered fabric and no air is entrapped between the second layer of left facing angle-biased calendered fabric and the second layer of right facing angle-biased calendered fabric. Additionally, in various embodiments, holes (e.g., using pins or needles) may be made in the second layer of right facing angle-biased calendered fabric for removal of any entrapped air which will escape during curing process. In various embodiments, the splice joint of the second layer of right facing angle-biased calendered fabric is positioned 30-40° away from the splice of second layer of the left facing angle-biased calendered fabric.

At block 328, a second layer of straight calendered fabric is circumferentially wrapped around the second layer of right facing angle-biased calendered fabric. In various embodiments, the second layer of straight calendered fabric is consolidated using a hand stitcher or knurled roller to make sure the second layer of straight calendered fabric is sticking to the second layer of right facing angle-biased calendered fabric and no air is entrapped between the second layer of right facing angle-biased calendered fabric and the second layer of straight calendered fabric. Additionally, in various embodiments, holes may be made (e.g., using pins or needles) in the second layer of straight calendered fabric for removal of entrapped air which will escape during curing process. In various embodiments, the splice joint of the second layer of straight calendered fabric is positioned 30-40° away from the splice of the second layer of right facing angle-biased calendered fabric.

At block 330, third and fourth layers of the second rubber wrapping compound are then wrapped around the second layer of straight calendered fabric layer. In various embodiments, the third and further layers of the second rubber wrapping compound are consolidated using a hand stitcher or knurled roller to make sure the third layer of the second rubber wrapping compound is sticking to the second layer of straight calendered fabric and the fourth layer of the second rubber wrapping compound is sticking to the third layer of the second rubber wrapping compound and no air is entrapped between the second layer of straight calendered fabric and the third layer of the second rubber wrapping compound and between the third layer of the second rubber wrapping compound and the fourth layer of the second rubber wrapping compound. Additionally, in various embodiments, holes may be made (e.g., using pins or needles) in the third and fourth layers of the second rubber wrapping compound for removal of entrapped air which will escape during curing process. In various embodiments, the splice joint of the third layer of the second rubber wrapping compound is positioned 30-40° away from the splice of the second layer of straight calendered fabric and the splice joint of the fourth layer of the second rubber wrapping compound is positioned 30-40° away from the splice of the third layer of the second rubber wrapping compound.

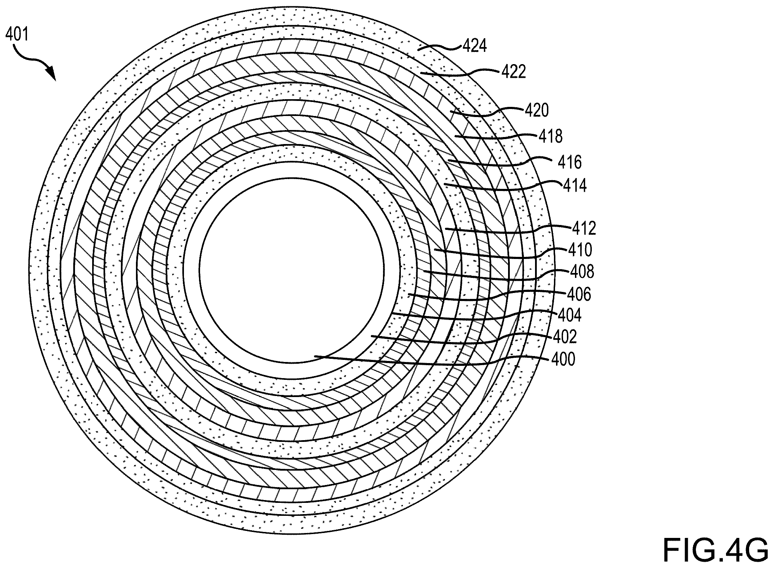

With temporary reference to FIG. 4G, a completely wrapped guided roller 401 is illustrated, in accordance with the claims. In various embodiments, mandrel 400 with bearing slot 402 is coated with a primer and an adhesive 404. In various embodiments, the primer and adhesive 404 is circumferentially wrapped with a first layer of a second rubber wrapping compound 406. The first layer of a second rubber wrapping compound 406 is circumferentially wrapped with a first layer of left facing angle-biased calendered fabric 408. The first layer of left facing angle-biased calendered fabric 408 is circumferentially wrapped with a first layer of right facing angle-biased calendered fabric 410. The first layer of right facing angle-biased calendered fabric 410 is circumferentially wrapped with a first layer of straight calendered fabric 412. The first layer of straight calendered fabric 412 is circumferentially wrapped with a second layer of the second rubber wrapping compound 414. In various embodiments, the second layer of a second rubber wrapping compound 414 is circumferentially wrapped with a second layer of left facing angle-biased calendered fabric 416. In various embodiments, the second layer of left facing angle-biased calendered fabric 416 is circumferentially wrapped with a second layer of right facing angle-biased calendered fabric 418. In various embodiments, the second layer of right facing angle-biased calendered fabric 418 is circumferentially wrapped with a second layer of straight calendered fabric 420. In various embodiments, the second layer of straight calendered fabric 420 is circumferentially wrapped with a third layer of the second rubber wrapping compound 422. In various embodiments, the third layer of the second rubber wrapping compound 422 is circumferentially wrapped with a fourth third layer of the second rubber wrapping compound 424.

In various embodiments, all the splice joints of the various layers are 30-40° away from each other so that the balance of the roller is maintained. In various embodiments, a two-piece compression mold is required to cure the guide roller. At block 332, a compression mold is preheated to a first predetermined temperature for a first predetermined time. In various embodiments, the first predetermined temperature may be between 130°C (266 degrees Fahrenheit) and 170°C (338 degrees Fahrenheit). In various embodiments, the first predetermined temperature may be between 140°C (284 degrees Fahrenheit) and 160°C (320 degrees Fahrenheit). In various embodiments, the first predetermined temperature may be 150°C (302 degrees Fahrenheit). In various embodiments, the first predetermined time may be between 1 minute and 5 minutes. In various embodiments, the first predetermined time may be between 2 minutes and 4 minutes. In various embodiments, the first predetermined time may be 2 minutes. At block 334, hydraulic press platens may be set to a second predetermined temperature. In various embodiments, the second predetermined temperature may be between 130°C (266 degrees Fahrenheit) and 170°C (338 degrees Fahrenheit). In various embodiments, the second predetermined temperature may be between 140°C (284 degrees Fahrenheit) and 160°C (320 degrees Fahrenheit). In various embodiments, the second predetermined temperature may be 150°C (302 degrees Fahrenheit).

At block 336, the wrapped guide roller is placed into the two-piece compression mold and the mold is placed between the two platens of the hydraulic curing press. In various embodiments the platens are closed for a second predetermined time period. In various embodiments, the second predetermined time may be between 2 seconds and 10 seconds. In various embodiments, the first predetermined time may be between 3 seconds and 8 seconds. In various embodiments, the first predetermined time may be 5 seconds. At block 338, after the second predetermined time period expires, the platens are opened to remove trapped air which remains in between the layers. In various embodiments, this process is referred to as bumping. At block 340, after bumping, the platens of the hydraulic press are closed, and the guide roller is cured to obtain a cured guide roller. In various embodiment, the curing process may take between 15 to 30 minutes. In various embodiment, the curing process may take between 18 to 28 minutes. In various embodiment, the curing process may take between 20-25 minutes. In various embodiments, the curing time may vary based on the rheological properties of the first rubber wrapping compound and the second rubber wrapping compound.

In various embodiments, after curing, the cured guide roller is removed from the mold and allowed to cool. In various embodiments, a surface of the cured guide roller may undergo grinding to obtain a surface of relatively uniform roughness. In various embodiments, after grinding, the guide roller is thoroughly cleaned, and one or more coats of polytetrafluoroethylene (PTFE) may be applied on the roughened guide roller. In that regard, once the one or more coats of polytetrafluoroethylene (PTFE) are applied on the roughened guide roller and the guide roller dries, then the guide roller is ready to be installed in a cargo compartment of an aircraft.

In various embodiments, one or more rubber compounds may be generated for producing a second guide roller utilizing injection molding. In various embodiments, a first rubber injection molding compound, 'Compound C,' starts with carboxylated nitrile rubber (XNBR) as the base polymer. In various embodiments, the XNBR may have an acrylonitrile content of between 22% and 42% with a Mooney viscosity of around 48 and 68 Mooney units (MU). In various embodiments, the XNBR may have an acrylonitrile content of between 27% and 37% with a Mooney viscosity of between 53 and 73 Mooney units (MU). In various embodiments, the XNBR has an acrylonitrile content of 32.5% with a Mooney viscosity of around 58 Mooney units (MU). In various embodiments, the reinforcing filler is monolayer graphene with a particle size (platelet) of between 4 micrometers (157.5 microinches) and 16 micrometers (629.9 microinches). In various embodiments, the reinforcing filler is monolayer graphene with a particle size (platelet) of between 7 micrometers (275.6 microinches) and 13 micrometers (511.8 microinches). In various embodiments, the reinforcing filler is monolayer graphene with a particle size (platelet) of 10 micrometers (393.7 microinches). In various embodiments, other compounding ingredients includes antioxidants, resins, plasticizers, accelerator activators, fungicides, accelerators, and/or magnesium carbonate treated and high oil treated version of sulfur for improved dispersion in XNBR.

In various embodiments, the materials of the first rubber injection molding compound may include: a base polymer or elastomer, such as carboxylated nitrile rubber (XNBR); an accelerator activator, such as zinc oxide (ZnO); an accelerator activator, such as Stearic Acid; a reinforcing filler, such as graphene; a resin, such as phenol formaldehyde (PF) resin; an antiozonant, such as Microscrystalline (MC) wax; an antioxidant, such as 4,4'-Bis(alpha,alpha-dimethylbenzyl)diphenylamine (CDPA); a plasticizer, such as Dioctyl Sebacate; a fungicide additive; an accelerator, such as N,N-Dicyclohexyl-2-benzothiazolsulfene amide (DCBS); an accelerator-sulfur doner, such as tetra methyl thiuram disulfide (TMTD); and a high-oil treated sulfur, such as magnesium carbonate (MC) treated sulfur. In various embodiments, the XNBR may be between 80 to 120 parts per hundred. In various embodiments, the XNBR may be between 90 to 110 parts per hundred. In various embodiments, the XNBR may be 100 parts per hundred. In various embodiments, the ZnO may be between 1 to 9 parts per hundred. In various embodiments, the ZnO may be between 3 to 9 parts per hundred. In various embodiments, the ZnO may be 5 parts per hundred. In various embodiments, the Stearic Acid may be between .5 to 3.5 parts per hundred. In various embodiments, the Stearic Acid may be between 1 to 3 parts per hundred. In various embodiments, the Stearic Acid may be 2 parts per hundred. In various embodiments, the Graphene may be between 2 to 18 parts per hundred. In various embodiments, the Graphene may be between 5 to 15 parts per hundred. In various embodiments, the Graphene may be 10 parts per hundred. In various embodiments, the PF resin may be between 1 to 9 parts per hundred. In various embodiments, the PF resin may be between 3 to 7 parts per hundred. In various embodiments, the PF resin may be 5 parts per hundred. In various embodiments, the MC wax may be between .5 to 3.5 parts per hundred. In various embodiments, the MC wax may be between 1 to 3 parts per hundred. In various embodiments, the MC wax may be 2 parts per hundred. In various embodiments, the CDPA may be between 0.4 to 2.4 parts per hundred. In various embodiments, the CDPA may be between .9 to 1.9 parts per hundred. In various embodiments, the CDPA may be 1.4 parts per hundred. In various embodiments, the Dioctyl Sebacate may be between 1 to 16 parts per hundred. In various embodiments, the Dioctyl Sebacate may be between 4 to 12 parts per hundred. In various embodiments, the Dioctyl Sebacate may be 8 parts per hundred. In various embodiments, the Fungicide may be between 0.1 to 0.9 parts per hundred. In various embodiments, the Fungicide may be between 0.3 to 0.7 parts per hundred. In various embodiments, the Fungicide may be 0.5 parts per hundred. In various embodiments, the DCBS may be between 0.3 to 1.7 parts per hundred. In various embodiments, the DCBS may be between .7 to 1.3 parts per hundred. In various embodiments, the DCBS may be 1 parts per hundred. In various embodiments, the TMTD may be between 0.5 to 1.9 parts per hundred. In various embodiments, the TMTD may be between 1 to 1.4 parts per hundred. In various embodiments, the TMTD may be 1.2 parts per hundred. In various embodiments, the MC treated sulfur may be between 0.1 to 0.7 parts per hundred. In various embodiments, the MC treated sulfur may be between 0.3 to 0.5 parts per hundred. In various embodiments, the MC treated sulfur may be 0.4 parts per hundred.

In various embodiments, the first rubber injection molding compound may be mixed in two stages. In various embodiments, stage 1, which may be referred to as a master batch, includes the base polymer or elastomer along with reinforcing fillers, accelerator activators, resins, plasticizers, fungicides, anti-ozonants, and anti-oxidants. In various embodiments, mixing of the master batch of the first rubber injection molding compound utilizes an internal mixer with intermeshing type rotors and is mixed in a similar manner to stage 1 of the first rubber injection molding compound. In various embodiments, the order that materials are added to the master batch of the first rubber injection molding compound and a mixing action that is performed as each material is added is provided with regard to Compound 'A' described previously. In various embodiments, the order that materials are added to the final batch of the first rubber injection molding compound and a mixing action that is performed as each material is added is provided with regard to Compound 'A' described previously. In various embodiments, the rubber temperature of the final batch should not be allowed to go more than 100-105°C. In various embodiments, the maturation or aging of the master batch of the first rubber injection molding compound and final batch of the first rubber injection molding compound is approximately 24 hours at each stage.

In various embodiments, a second rubber injection molding compound, 'Compound D,' is produced. In various embodiments, the second rubber injection molding compound is formulated using hydrogenated nitrile rubber (HNBR) as the base polymer. In various embodiments, two different types of HNBR may be utilized. In various embodiments, the first HNBR may have an acrylonitrile content of between 24% and 44% with a Mooney viscosity of around 60 and 80 Mooney units (MU). In various embodiments, the HNBR may have an acrylonitrile content of between 29% and 39% with a Mooney viscosity of between 65 and 75 Mooney units (MU). In various embodiments, the HNBR has an acrylonitrile content of 34% with a Mooney viscosity of around 70 Mooney units (MU). In various embodiments, the residual double bond of the HNBR may be < 1.5%. In various embodiments, the residual double bond of the HNBR may be <1.2%. In various embodiments, the residual double bond of the HNBR may be <0.9%. In various embodiments, the second HNBR may have an improved grade, i.e. good physical properties with improved processing characteristics. In various embodiments, the two different types of HNBR may be blended at 70 to 90 parts per hundred rubber (phr) and 30 to 10 phr respectively to have smooth processing for higher production outputs. In various embodiments, the reinforcing filler is monolayer graphene with a particle size (platelet) of between 4 micrometers (157.5 microinches) and 16 micrometers (629.9 microinches). In various embodiments, the reinforcing filler is monolayer graphene with a particle size (platelet) of between 7 micrometers (275.6 microinches) and 13 micrometers (511.8 microinches). In various embodiments, the reinforcing filler is monolayer graphene with a particle size (platelet) of 10 micrometers (393.7 microinches). In various embodiments, other compounding ingredients includes antioxidants, resins, plasticizers, accelerator activators, fungicides, crosslinking agent, and crosslinking peroxide.

In various embodiments, the materials of the second rubber injection molding compound may include: a base polymer or elastomer, such as hydrogenated nitrile rubber (HNBR); a reinforcing filler, such as graphene; a fungicide additive; an antioxidant, such as 4,4'-Bis(alpha,alpha-dimethylbenzyl)diphenylamine (CDPA); an accelerator activator, such as magnesium oxide (MgO); an antioxidant, such as Vulkanox ZMB2; an accelerator activator, such as zinc oxide (ZnO); an cross-linking agent for peroxide cure, such as triallyl isocyanurate (TAIC 70); and a cross-linking agent, such as Perkadox 14-40B-PD-S. In various embodiments, a first HNBR, such as Therban 3407, may be between 50 to 90 parts per hundred. In various embodiments, the first HNBR may be between 60 to 80 parts per hundred. In various embodiments, the first HNBR may be 70 parts per hundred. In various embodiments, a second HNBR, such as Therban AT3404, may be between 10 to 50 parts per hundred. In various embodiments, the second HNBR may be between 20 to 40 parts per hundred. In various embodiments, the second HNBR may be 30 parts per hundred. In various embodiments, the Graphene may be between 2 to 18 parts per hundred. In various embodiments, the Graphene may be between 5 to 15 parts per hundred. In various embodiments, the Graphene may be 10 parts per hundred. In various embodiments, the Fungicide may be between 0.1 to 0.9 parts per hundred. In various embodiments, the Fungicide may be between 0.3 to 0.7 parts per hundred. In various embodiments, the Fungicide may be 0.5 parts per hundred. In various embodiments, the CDPA may be between 0.5 to 2.5 parts per hundred. In various embodiments, the CDPA may be between 1 to 2 parts per hundred. In various embodiments, the CDPA may be 1.5 parts per hundred. In various embodiments, the MgO may be between 1 to 5 parts per hundred. In various embodiments, the MgO may be between 2 to 4 parts per hundred. In various embodiments, the MgO may be 3 parts per hundred. In various embodiments, the Vulkanox ZMB2 may be between 0.1 to 0.9 parts per hundred. In various embodiments, the Vulkanox ZMB2 may be between 0.3 to 0.7 parts per hundred. In various embodiments, the Vulkanox ZMB2 may be 0.5 parts per hundred. In various embodiments, the ZnO may be between 1 to 9 parts per hundred. In various embodiments, the ZnO may be between 3 to 7 parts per hundred. In various embodiments, the ZnO may be 5 parts per hundred. In various embodiments, the TAIC 70 may be between 1 to 5 parts per hundred. In various embodiments, the TAIC 70 may be between 2 to 4 parts per hundred. In various embodiments, the TAIC 70 may be 3 parts per hundred. In various embodiments, the Perkadox may be between 5 to 15 parts per hundred. In various embodiments, the Perkadox may be between 7 to 12 parts per hundred. In various embodiments, the Perkadox may be 10 parts per hundred.

In various embodiments, the formulation for the second rubber injection molding compound provided in Table 6 may be mixed in two stages. In various embodiments, stage 1, which may be referred to as a master batch, includes the base polymer or elastomer along with reinforcing fillers, accelerator activators, resins, plasticizers, fungicides, anti-ozonants, and anti-oxidants. In various embodiments, mixing of the master batch of the second rubber injection molding compound utilizes an internal mixer with intermeshing type rotors and is mixed in a similar manner to stage 1 of the first rubber injection molding compound. In various embodiments, mixing of the final batch of the second rubber injection molding compound utilizers a two-roll mill in a similar manner to stage 2 of the first rubber injection molding compound. In various embodiments, the order that materials are added to the master batch of the second rubber injection molding compound and a mixing action that is performed as each material is added is provided with regard to Compound 'A' described previously. In various embodiments, the order that materials are added to the final batch of the second rubber injection molding compound and a mixing action that is performed as each material is added is provided in with regard to Compound 'A' described previously. In various embodiments, the rubber temperature of the final batch should not be allowed to go more than 100-105°C. In various embodiments, the maturation or aging of the master batch of the second rubber injection molding compound and final batch of the second rubber injection molding compound is approximately 24 hours at each stage. In various embodiments, the first rubber injection molding compound and the second rubber injection molding compound are utilized for injection into the mandrels.

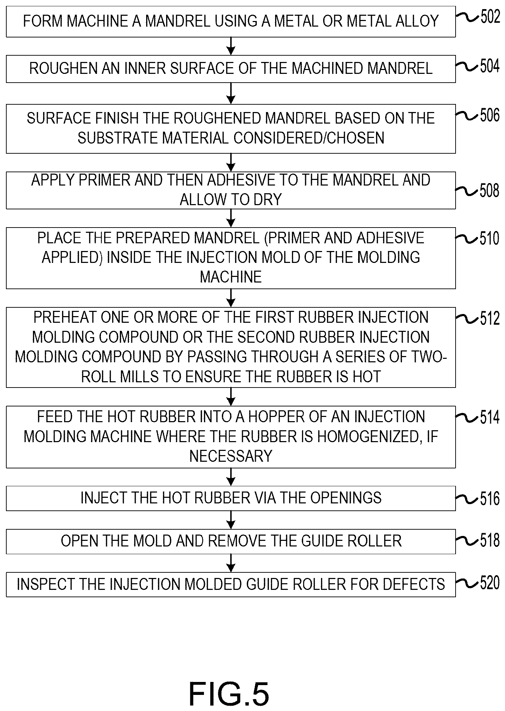

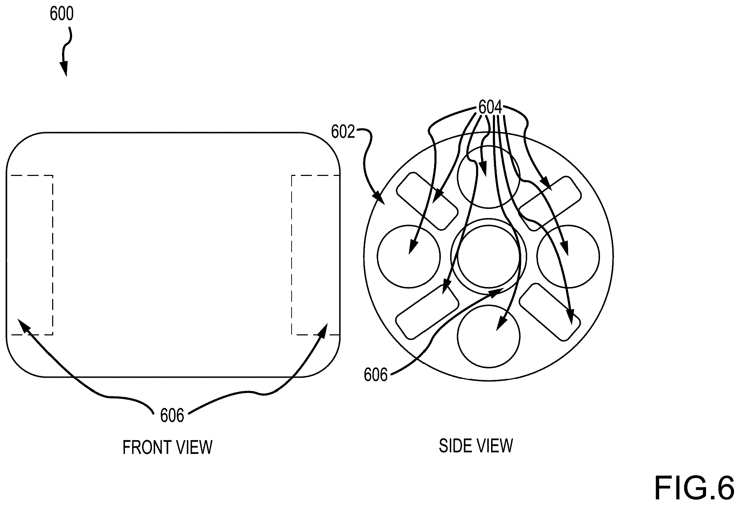

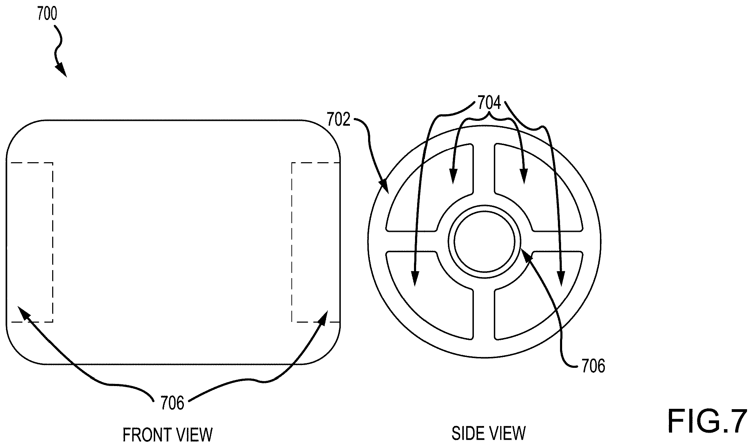

Referring to FIG. 5, a flowchart for manufacturing an injection molded guide roller is illustrated, in accordance with various embodiments. At block 502, a mandrel is formed/machined using a metal or metal alloy. In various embodiments, the forming may include forming a plurality of cavities within the mandrel. In various embodiments, the machining may include forming bearing slots for housing the bearings on which the guide roller will rotate. With temporary reference to FIG. 6, an end 602 of a mandrel 600 with a bearing slots 606 including a plurality of openings 604 through which the rubber compound will be injected so as to provide a uniform injection process is illustrated, in accordance with various embodiments. With temporary reference to FIG. 7, an end 702 of a mandrel 700 with a bearing slots 706 including a plurality of openings 704 through which the rubber compound will be injected so as to provide a uniform injection process is illustrated, in accordance with various embodiments. At block 504, an inner surface of the machined mandrel is roughened, i.e. through grit blasting. At block 506, the roughened mandrel is then surface finished based on the substrate material considered/chosen.. In various embodiments, metal portions of the mandrel may undergo chemical treatments to reduce corrosion.

In various embodiments, bonding between the roughened mandrel and the injection molding compound may be enhanced via a primer and an adhesive. In various embodiments, the primer may be a rubber-to-substrate primer, such as Chemlok^{®} 205 primer and the adhesive may be a rubber-to-substrate adhesive, such as Chemlok^{®} 250 adhesive. At block 508, a primer is applied to an inside of the plurality of cavities of the mandrel and allowed to dry and then, an adhesive is applied to the inside of the plurality of cavities of the mandrel and allowed to dry in a dust free environment to avoid any surface contamination.

At block 510, the prepared mandrel (primer and adhesive applied) is placed inside the injection mold of the molding machine. At block 512, one or more of the first rubber injection molding compound or the second rubber injection molding compound is preheated by passing through a series of two-roll mills to ensure the rubber is hot. At block 514, the heated first rubber injection molding compound or the second rubber injection molding compound is then fed into a hopper of an injection molding machine where the rubber is homogenized, if necessary. At block 516, the hot rubber is injected into the mandrel holes via the openings at the ends of the mandrel. In various embodiments, the mold remains closed for a predetermined time period to complete the curing process. In various embodiment, the curing process may take between 15 to 30 minutes. In various embodiment, the curing process may take between 18 to 28 minutes. In various embodiment, the curing process may take between 20-25 minutes. At block 518, once the curing is complete, the mold is opened, and the guide roller is removed. At block 520, the injection molded guide roller is inspected for defects. In various embodiments, the curing time may vary based on the rheological properties of the first rubber wrapping compound and the second rubber wrapping compound.

In various embodiments, typical types of loading that the guide roller undergoes may be sudden, thrust, majorly radial, and partially axial, among others. Considering the loads applied on the guide roller, the bearings, such as bearing that would fit into bearing slots 606 of FIG. 6 and bearing slots 706 of FIG. 7, would be cylindrical roller bearings. In various embodiments, double row cylindrical sealed bearings may be utilized for predominantly radial and secondary axial loads. In various embodiments, sealed bearings may be utilized to avoid debris, dust, and other foreign materials from entering the bearings, thereby rendering the bearing unusable and eventually leading to uneven wear (cutting, chipping) of the roller material on the guide roller. In various embodiment, the bearings may be dipped in liquid nitrogen before being press fitted into the bearing slots. In various embodiments, a liquid nitrogen dipping process may be employed to shrink the bearings which allows the bearings to perfectly fit into the bearing slots and then expand to secure the bearings in the bearing slots.

Benefits and other advantages have been described herein with regard to specific embodiments. Furthermore, the connecting lines shown in the various figures contained herein are intended to represent exemplary functional relationships and/or physical couplings between the various elements. It should be noted that many additional functional relationships or physical connections may be present in a practical system. The scope of the disclosure is accordingly to be limited by nothing other than the appended claims.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. After reading the description, it will be apparent to one skilled in the relevant art(s) how to implement the disclosure in alternative embodiments of the invention the scope of which is defined by the claims.

## Claims

1. A guide roller for a cargo doorway of an aircraft, comprising:
a mandrel (400);
a first layer of a second rubber wrapping compound (406) disposed circumferentially around the mandrel;
at least one first layer of a first rubber wrapping compound (408) disposed circumferentially around the first layer of the second rubber wrapping compound;
a second layer of the second rubber wrapping compound (414) disposed circumferentially around the at least one first layer of the first rubber wrapping compound;
at least one second layer of the first rubber wrapping compound (416) disposed circumferentially around the second layer of the second rubber wrapping compound; and
at least one third layer of the second rubber wrapping compound (422) disposed circumferentially around the at least one second layer of the first rubber wrapping compound; and **characterised in that**:
the at least one first layer of the first rubber wrapping compound disposed circumferentially around the first layer of the second rubber wrapping compound comprises:
a first layer of left facing angle-biased calendered fabric (408) disposed circumferentially around the first layer of the second rubber wrapping compound;
a first layer of right facing angle-biased calendered fabric (410) disposed circumferentially around the first layer of left facing angle-biased calendered fabric; and
a first layer of straight calendered fabric (412) disposed circumferentially around the first layer of right facing angle-biased calendered fabric.

2. The guide roller of claim 1, wherein the at least one second layer of the first rubber wrapping compound disposed circumferentially around the second layer of the second rubber wrapping compound comprises:
a second layer of left facing angle-biased calendered fabric (416) disposed circumferentially around the second layer of the second rubber wrapping compound;
a second layer of right facing angle-biased calendered fabric (418) disposed circumferentially around the second layer of left facing angle-biased calendered fabric; and
a second layer of straight calendered fabric (420) disposed circumferentially around the second layer of right facing angle-biased calendered fabric.

3. The guide roller of any preceding claim, wherein the at least one third layer of the second rubber wrapping compound disposed circumferentially around the at least one second layer of the first rubber wrapping compound comprises:
a third layer of the second rubber wrapping compound (422) disposed circumferentially around the at least one second layer of the first rubber wrapping compound; and
a fourth layer of the second rubber wrapping (424) compound disposed circumferentially around the third layer of the second rubber wrapping compound.

4. The guide roller of any preceding claim, wherein the mandrel is coated with a primer and then coated with an adhesive (404).

5. The guide roller of any preceding claim, wherein each of the first layer of the second rubber wrapping compound, the at least one first layer of the first rubber wrapping compound, the second layer of the second rubber wrapping compound, the at least one second layer of the first rubber wrapping compound, and the at least one third layer of the second rubber wrapping compound are consolidated to at least one of the mandrel or previous layer and to ensure no air is entrapped between layers.

6. The guide roller of any preceding claim, further comprising:
holes formed in the first layer of the second rubber wrapping compound.

7. The guide roller of any preceding claim, wherein the first layer of the second rubber wrapping compound, the second layer of the second rubber wrapping compound, and the at least one third layer of the second rubber wrapping compound comprise a hydrogenated nitrile rubber, HNBR, base polymer, a reinforcing filler, and at least one of antioxidants, fungicides, resins, plasticizers, accelerator activators, accelerators, or a magnesium carbonate treated and high oil treated version of sulfur, wherein the reinforcing filler is monolayer graphene with a particle size (platelet) of between 4 micrometers and 16 micrometers; or
wherein the at least one first layer of the first rubber wrapping compound and the at least one second layer of the first rubber wrapping compound comprise a hydrogenated nitrile rubber, HNBR, as base polymer, a reinforcing filler, and at least one of antioxidants, resins, plasticizers, accelerator activators, accelerators, or a magnesium carbonate treated and high oil treated sulfur, wherein the reinforcing filler is monolayer graphene with a particle size (platelet) of between 4 micrometers and 16 micrometers.

8. The guide roller of any preceding claim, further comprising:
a bearing disposed in each end of the mandrel.

9. A method of manufacturing a guide roller for a cargo doorway of an aircraft, comprising:
disposing circumferentially a first layer of a second rubber wrapping compound around a mandrel;
disposing circumferentially at least one first layer of a first rubber wrapping compound around the first layer of the second rubber wrapping compound;
disposing circumferentially a second layer of the second rubber wrapping compound around the at least one first layer of the first rubber wrapping compound;
disposing circumferentially at least one second layer of the first rubber wrapping compound around the second layer of the second rubber wrapping compound; and
disposing circumferentially at least one third layer of the second rubber wrapping compound around the at least one second layer of the first rubber wrapping compound; and **characterised in that**:
disposing circumferentially the at least one first layer of the first rubber wrapping compound around the first layer of the second rubber wrapping compound further comprises:
disposing circumferentially a first layer of left facing angle-biased calendered fabric around the first layer of the second rubber wrapping compound;
disposing circumferentially a first layer of right facing angle-biased calendered fabric around the first layer of left facing angle-biased calendered fabric; and
disposing circumferentially a first layer of straight calendered fabric around the first layer of right facing angle-biased calendered fabric.

10. The method of claim 9, wherein disposing circumferentially the at least one second layer of the first rubber wrapping compound around the second layer of the second rubber wrapping compound comprises:
disposing circumferentially a second layer of left facing angle-biased calendered fabric around the second layer of the second rubber wrapping compound;
disposing circumferentially a second layer of right facing angle-biased calendered fabric around the second layer of left facing angle-biased calendered fabric; and
disposing circumferentially a second layer of straight calendered fabric around the second layer of right facing angle-biased calendered fabric.

11. The method of claim 9 or 10, wherein disposing circumferentially the at least one third layer of the second rubber wrapping compound around the at least one second layer of the first rubber wrapping compound comprises:
disposing circumferentially a third layer of the second rubber wrapping compound around the at least one second layer of the first rubber wrapping compound; and
disposing circumferentially a fourth layer of the second rubber wrapping compound around the third layer of the second rubber wrapping compound.

12. The method of any of claims 9, 10 or 11, wherein, prior to disposing the first layer of the second rubber wrapping compound circumferentially around the mandrel, the mandrel is coated with a primer and then coated with an adhesive.

13. The method of any of claims 9 to 12, further comprising:
consolidating each of the first layer of the second rubber wrapping compound, the at least one first layer of the first rubber wrapping compound, the second layer of the second rubber wrapping compound, the at least one second layer of the first rubber wrapping compound, and the at least one third layer of the second rubber wrapping compound prior to application to at least one of the mandrel or previous layer.

## Patentansprüche

1. Führungsrolle für eine Frachttüröffnung eines Luftfahrzeugs, umfassend:
einen Dorn (400);
eine erste Schicht einer zweiten Kautschukumhüllungsverbindung (406), die in Umfangsrichtung um den Dorn herum angeordnet ist;
mindestens eine erste Schicht einer ersten Kautschukumhüllungsverbindung (408), die in Umfangsrichtung um die erste Schicht der zweiten Kautschukumhüllungsverbindung angeordnet ist;
eine zweite Schicht der zweiten Kautschukumhüllungsverbindung (414), die in Umfangsrichtung um die mindestens eine erste Schicht der ersten Kautschukumhüllungsverbindung herum angeordnet ist;
mindestens eine zweite Schicht der ersten Kautschukumhüllungsverbindung (416), die in Umfangsrichtung um die zweite Schicht der zweiten Kautschukumhüllungsverbindung herum angeordnet ist; und
mindestens eine dritte Schicht der zweiten Kautschukumhüllungsverbindung (422), die in Umfangsrichtung um die mindestens eine zweite Schicht der ersten Kautschukumhüllungsverbindung herum angeordnet ist; und **dadurch gekennzeichnet, dass**:
die mindestens eine erste Schicht der ersten Kautschukumhüllungsverbindung, die in Umfangsrichtung um die erste Schicht der zweiten Kautschukumhüllungsverbindung herum angeordnet ist, Folgendes umfasst:
eine erste Schicht eines linksgerichteten winkelverzerrten kalendrierten Gewebes (408), die in Umfangsrichtung um die erste Schicht der zweiten Kautschukumhüllungsverbindung herum angeordnet ist;
eine erste Schicht eines rechtsgerichteten winkelverzerrten kalendrierten Gewebes (410), die in Umfangsrichtung um die erste Schicht des linksgerichteten winkelverzerrten kalendrierten Gewebes herum angeordnet ist; und
eine erste Schicht eines geraden kalandrierten Gewebes (412), die in Umfangsrichtung um die erste Schicht des rechtsgerichteten winkelverzerrten kalendrierten Gewebes herum angeordnet ist.

2. Führungsrolle nach Anspruch 1, wobei die mindestens eine zweite Schicht der ersten Kautschukumhüllungsverbindung, die in Umfangsrichtung um die zweite Schicht der zweiten Kautschukumhüllungsverbindung angeordnet ist, Folgendes umfasst:
eine zweite Schicht des linksgerichteten winkelverzerrten kalendrierten Gewebes (416), die in Umfangsrichtung um die zweite Schicht der zweiten Kautschukumhüllungsverbindung herum angeordnet ist;
eine zweite Schicht des rechtsgerichteten winkelverzerrten kalendrierten Gewebes (418), die in Umfangsrichtung um die zweite Schicht des linksgerichteten winkelverzerrten kalendrierten Gewebes herum angeordnet ist; und
eine zweite Schicht des geraden kalandrierten Gewebes (420), die in Umfangsrichtung um die zweite Schicht des rechtsgerichteten winkelverzerrten kalendrierten Gewebes herum angeordnet ist.

3. Führungsrolle nach einem der vorhergehenden Ansprüche, wobei die mindestens eine dritte Schicht der zweiten Kautschukumhüllungsverbindung, die in Umfangsrichtung um die mindestens eine zweite Schicht der ersten Kautschukumhüllungsverbindung angeordnet ist, Folgendes umfasst:
eine dritte Schicht der zweiten Kautschukumhüllungsverbindung (422), die in Umfangsrichtung um die mindestens zweite Schicht der ersten Kautschukumhüllungsverbindung herum angeordnet ist; und
eine vierte Schicht der zweiten Kautschukumhüllung (424), die in Umfangsrichtung um die dritte Schicht der zweiten Kautschukumhüllungsverbindung herum angeordnet ist.

4. Führungsrolle nach einem der vorhergehenden Ansprüche, wobei der Dorn mit einer Grundierung und dann mit einem Klebstoff (404) beschichtet wird.

5. Führungsrolle nach einem der vorhergehenden Ansprüche, wobei jede der ersten Schicht der zweiten Kautschukumhüllungsverbindung, der mindestens einen ersten Schicht der ersten Kautschukumhüllungsverbindung, der zweiten Schicht der zweiten Kautschukumhüllungsverbindung, der mindestens einen zweiten Schicht der ersten Kautschukumhüllungsverbindung und der mindestens einen dritten Schicht der zweiten Kautschukumhüllungsverbindung mit mindestens einem von dem Dorn oder der vorherigen Schicht verfestigt wird, um sicherzustellen, dass keine Luft zwischen den Schichten eingeschlossen ist.

6. Führungsrolle nach einem der vorhergehenden Ansprüche, ferner umfassend:
Löcher, die in der ersten Schicht der zweiten Kautschukumhüllungsverbindung ausgebildet sind.

7. Führungsrolle nach einem der vorhergehenden Ansprüche, wobei die erste Schicht der zweiten Kautschukumhüllungsverbindung, die zweite Schicht der zweiten Kautschukumhüllungsverbindung und die mindestens eine dritte Schicht der zweiten Kautschukumhüllungsverbindung ein Basispolymer aus hydriertem Nitrilkautschuk (HNBR), einen verstärkenden Füllstoff und mindestens eines von Antioxidantien, Fungiziden, Harzen, Weichmachern, Beschleunigungsaktivatoren, Beschleunigern oder eine mit Magnesiumcarbonat behandelte und mit hohem Ölgehalt behandelte Version von Schwefel umfassen, wobei der verstärkende Füllstoff ein einschichtiges Graphen mit einer Teilchengröße (Plättchen) zwischen 4 Mikrometern und 16 Mikrometern ist; oder wobei die mindestens erste Schicht der ersten Kautschukumhüllungsverbindung und die mindestens eine zweite Schicht der ersten Kautschukumhüllungsverbindung ein hydriertes Nitrilkautschuk (HNBR) als Basispolymer, einen verstärkenden Füllstoff und mindestens eines von Antioxidantien, Harzen, Weichmachern, Beschleunigungsaktivatoren, Beschleunigern oder einen mit Magnesiumcarbonat behandelten und mit hohem Ölgehalt behandelten Schwefel umfassen, wobei der verstärkende Füllstoff ein einschichtiges Graphen mit einer Teilchengröße (Plättchen) zwischen 4 Mikrometern und 16 Mikrometern ist.

8. Führungsrolle nach einem der vorhergehenden Ansprüche, ferner umfassend:
ein Lager, das in jedem Ende des Dorns angeordnet ist.

9. Verfahren zum Herstellen einer Führungsrolle für eine Frachttüröffnung eines Luftfahrzeugs, umfassend:
Anordnen einer ersten Schicht einer zweiten Kautschukumhüllungsverbindung in Umfangsrichtung um einen Dorn herum;
Anordnen mindestens einer ersten Schicht einer ersten Kautschukumhüllungsverbindung in Umfangsrichtung um die erste Schicht der zweiten Kautschukumhüllungsverbindung herum;
Anordnen einer zweiten Schicht der zweiten Kautschukumhüllungsverbindung in Umfangsrichtung um die mindestens eine erste Schicht der ersten Kautschukumhüllungsverbindung herum;
Anordnen mindestens einer zweiten Schicht der ersten Kautschukumhüllungsverbindung in Umfangsrichtung um die zweite Schicht der zweiten Kautschukumhüllungsverbindung herum; und
Anordnen mindestens einer dritten Schicht der zweiten Kautschukumhüllungsverbindung in Umfangsrichtung um die mindestens eine zweite Schicht der ersten Kautschukumhüllungsverbindung herum; und **dadurch gekennzeichnet, dass**:
das Anordnen der mindestens einen ersten Schicht der ersten Kautschukumhüllungsverbindung in Umfangsrichtung um die erste Schicht der zweiten Kautschukumhüllungsverbindung herum ferner Folgendes umfasst:
Anordnen einer ersten Schicht des linksgerichteten winkelverzerrten kalendrierten Gewebes in Umfangsrichtung um die erste Schicht der zweiten Kautschukumhüllungsverbindung herum;
Anordnen einer ersten Schicht des rechtsgerichteten winkelverzerrten kalendrierten Gewebes in Umfangsrichtung um die erste Schicht des linksgerichteten winkelverzerrten kalendrierten Gewebes herum; und
Anordnen einer ersten Schicht des geraden kalandrierten Gewebes in Umfangsrichtung um die erste Schicht des rechtsgerichteten winkelverzerrten kalendrierten Gewebes herum.

10. Verfahren nach Anspruch 9, wobei das Anordnen der mindestens einen zweiten Schicht der ersten Kautschukumhüllungsverbindung in Umfangsrichtung um die zweite Schicht der zweiten Kautschukumhüllungsverbindung herum Folgendes umfasst:
Anordnen einer zweiten Schicht des linksgerichteten winkelverzerrten kalendrierten Gewebes in Umfangsrichtung um die zweite Schicht der zweiten Kautschukumhüllungsverbindung herum;
Anordnen einer zweiten Schicht des rechtsgerichteten winkelverzerrten kalendrierten Gewebes in Umfangsrichtung um die zweite Schicht des linksgerichteten winkelverzerrten kalendrierten Gewebes herum; und
Anordnen einer zweiten Schicht des geraden kalandrierten Gewebes in Umfangsrichtung um die zweite Schicht des rechtsgerichteten winkelverzerrten kalendrierten Gewebes herum.

11. Verfahren nach Anspruch 9 oder 10, wobei das Anordnen der mindestens einen dritten Schicht der zweiten Kautschukumhüllungsverbindung in Umfangsrichtung um die mindestens eine zweite Schicht der ersten Kautschukumhüllungsverbindung herum Folgendes umfasst:
Anordnen einer dritten Schicht der zweiten Kautschukumhüllungsverbindung in Umfangsrichtung um die mindestens zweite Schicht der ersten Kautschukumhüllungsverbindung herum; und
Anordnen einer vierten Schicht der zweiten Kautschukumhüllungsverbindung in Umfangsrichtung um die dritte Schicht der zweiten Kautschukumhüllungsverbindung herum.

12. Verfahren nach einem der Ansprüche 9, 10 oder 11, wobei der Dorn vor dem Anordnen der ersten Schicht der zweiten Kautschukumhüllungsverbindung in Umfangsrichtung um den Dorn herum mit einer Grundierung und dann mit einem Klebstoff beschichtet wird.

13. Verfahren nach einem der Ansprüche 9 bis 12, ferner umfassend:
Verfestigen jeder der ersten Schicht der zweiten Kautschukumhüllungsverbindung, der mindestens einen ersten Schicht der ersten Kautschukumhüllungsverbindung, der zweiten Schicht der zweiten Kautschukumhüllungsverbindung, der mindestens einen zweiten Schicht der ersten Kautschukumhüllungsverbindung und der mindestens einen dritten Schicht der zweiten Kautschukumhüllungsverbindung vor der Aufbringung auf mindestens eines von dem Dorn oder der vorherigen Schicht.

## Revendications

1. Rouleau de guidage pour une porte de chargement d'un aéronef, comprenant :
un mandrin (400) ;
une première couche d'un second composé (406) d'enveloppe en caoutchouc disposée circonférentiellement autour du mandrin ;
au moins une première couche d'un premier composé (408) d'enveloppe en caoutchouc disposée circonférentiellement autour de la première couche du second composé d'enveloppe en caoutchouc ;
une deuxième couche du second composé (414) d'enveloppe en caoutchouc disposée circonférentiellement autour de l'au moins une première couche du premier composé d'enveloppe en caoutchouc ;
au moins une deuxième couche du premier composé (416) d'enveloppe en caoutchouc disposée circonférentiellement autour de la deuxième couche du second composé d'enveloppe en caoutchouc ; et
au moins une troisième couche du second composé (422) d'enveloppe en caoutchouc disposée circonférentiellement autour de l'au moins une deuxième couche du premier composé d'enveloppe en caoutchouc ; et **caractérisé en ce que** :
l'au moins une première couche du premier composé d'enveloppe en caoutchouc disposée circonférentiellement autour de la première couche du second composé d'enveloppe en caoutchouc comprend :
une première couche de tissu (408) calandré incliné vers la gauche disposée circonférentiellement autour de la première couche du second composé d'enveloppe en caoutchouc ;
une première couche de tissu (410) calandré incliné vers la droite disposée circonférentiellement autour de la première couche de tissu calandré incliné vers la gauche ; et
une première couche de tissu (412) calandré droit disposée circonférentiellement autour de la première couche du tissu calandré incliné vers la droite.

2. Rouleau de guidage selon la revendication 1, dans lequel l'au moins une deuxième couche du premier composé d'enveloppe en caoutchouc disposée circonférentiellement autour de la deuxième couche du second composé d'enveloppe en caoutchouc comprend :
une deuxième couche de tissu (416) calandré incliné vers la gauche disposée circonférentiellement autour de la deuxième couche du second composé d'enveloppe en caoutchouc ;
une deuxième couche de tissu (418) calandré incliné vers la droite disposée circonférentiellement autour de la deuxième couche de tissu calandré incliné vers la gauche ; et
une deuxième couche de tissu (420) calandré droit disposée circonférentiellement autour de la deuxième couche du tissu calandré incliné vers la droite.

3. Rouleau de guidage selon une quelconque revendication précédente, dans lequel l'au moins une troisième couche du second composé d'enveloppe en caoutchouc disposée circonférentiellement autour de l'au moins une deuxième couche du premier composé d'enveloppe en caoutchouc comprend :
une troisième couche du second composé (422) d'enveloppe en caoutchouc disposée circonférentiellement autour de l'au moins une deuxième couche du composé d'enveloppe en caoutchouc ; et
une quatrième couche du second composé d'enveloppe (424) en caoutchouc disposée circonférentiellement autour de la troisième couche du second composé d'enveloppe en caoutchouc.

4. Rouleau de guidage selon une quelconque revendication précédente, dans lequel le mandrin est recouvert d'un apprêt puis d'un adhésif (404).

5. Rouleau de guidage selon une quelconque revendication précédente, dans lequel chacune de la première couche du second composé d'enveloppe en caoutchouc, l'au moins une première couche du premier composé d'enveloppe en caoutchouc, la deuxième couche du second composé d'enveloppe en caoutchouc, l'au moins une deuxième couche du premier composé d'enveloppe en caoutchouc et l'au moins une troisième couche du second composé d'enveloppement en caoutchouc sont consolidées sur au moins l'un(e) du mandrin ou de la couche précédente et pour garantir qu'aucun air n'est emprisonné entre les couches.

6. Rouleau de guidage selon une quelconque revendication précédente, comprenant en outre :
des trous formés dans la première couche du second composé d'enveloppe en caoutchouc.

7. Rouleau de guidage selon une quelconque revendication précédente, dans lequel la première couche du second composé d'enveloppe en caoutchouc, la deuxième couche du second composé d'enveloppe en caoutchouc et l'au moins une troisième couche du second composé d'enveloppe en caoutchouc comprennent un caoutchouc nitrile hydrogéné, HNBR, un polymère de base, une charge renforçante et au moins l'un(e) parmi des antioxydants, fongicides, résines, plastifiants, activateurs d'accélérateurs, accélérateurs ou une version de soufre traitée au carbonate de magnésium et à haute teneur en huile, dans lequel la charge renforçante est du graphène monocouche dont la taille de particule (plaquette) est comprise entre 4 et 16 micromètres ; ou
dans lequel l'au moins une première couche du premier composé d'enveloppe en caoutchouc et l'au moins une deuxième couche du premier composé d'enveloppe en caoutchouc comprennent un caoutchouc nitrile hydrogéné, HNBR, un polymère de base, une charge renforçante, et au moins l'un(e) parmi des antioxydants, résines, plastifiants, activateurs d'accélérateurs, accélérateurs ou une version de soufre traitée au carbonate de magnésium et à haute teneur en huile, dans lequel la charge renforçante est du graphène monocouche dont la taille de particule (plaquette) est comprise entre 4 et 16 micromètres .

8. Rouleau de guidage selon une quelconque revendication précédente, comprenant en outre :
un palier disposé à chaque extrémité du mandrin.

9. Procédé de préparation d'un rouleau de guidage pour une porte de chargement d'un aéronef, comprenant :
la disposition circonférentielle d'une première couche d'un second composé d'enveloppe en caoutchouc autour d'un mandrin ;
la disposition circonférentielle d'au moins une première couche d'un composé d'enveloppe en caoutchouc autour de la première couche du second composé d'enveloppe en caoutchouc ;
la disposition circonférentielle d'une deuxième couche du second composé d'enveloppe en caoutchouc autour de l'au moins une première couche du premier composé d'enveloppe en caoutchouc ;
la disposition circonférentielle d'au moins une deuxième couche du premier composé d'enveloppe en caoutchouc autour de la deuxième couche du second composé d'enveloppe en caoutchouc ; et
la disposition circonférentielle d'au moins une troisième couche du second composé d'enveloppe en caoutchouc autour de l'au moins une deuxième couche du premier composé d'enveloppe en caoutchouc ; et **caractérisé en ce que** :
la disposition circonférentielle de l'au moins une première couche du premier composé d'enveloppe en caoutchouc autour de la première couche du second composé d'enveloppe en caoutchouc comprend en outre :
la disposition circonférentielle d'une première couche de tissu calandré incliné vers la gauche autour de la première couche du second composé d'enveloppe en caoutchouc ;
la disposition circonférentielle d'une première couche de tissu calandré incliné vers la droite autour de la première couche de tissu calandré incliné vers la gauche ; et
la disposition circonférentielle d'une première couche de tissu calandré droit autour de la première couche de tissu calandré incliné vers la droite.

10. Procédé selon la revendication 9, dans lequel la disposition circonférentielle de l'au moins une deuxième couche du premier composé d'enveloppe en caoutchouc autour de la deuxième couche du second composé d'enveloppe en caoutchouc comprend :
la disposition circonférentielle d'une deuxième couche de tissu calandré incliné vers la gauche autour de la deuxième couche de second composé d'enveloppe en caoutchouc ;
la disposition circonférentielle d'une deuxième couche de tissu calandré incliné vers la droite autour de la deuxième couche de tissu calandré incliné vers la gauche ; et
la disposition circonférentielle d'une deuxième couche de tissu calandré droit autour de la deuxième couche de tissu calandré incliné vers la droite.

11. Procédé selon la revendication 9 ou 10, dans lequel la disposition circonférentielle de l'au moins une troisième couche du second composé d'enveloppe en caoutchouc autour de l'au moins une deuxième couche du premier composé d'enveloppe en caoutchouc comprend :
la disposition circonférentielle d'une troisième couche du second composé d'enveloppe en caoutchouc autour de l'au moins une deuxième couche du premier composé d'enveloppe en caoutchouc ; et
la disposition circonférentielle d'une quatrième couche du second composé d'enveloppe en caoutchouc autour de la troisième couche du second composé d'enveloppe en caoutchouc.

12. Procédé selon l'une quelconque des revendications 9, 10 ou 11, dans lequel, avant la disposition de la première couche du second composé d'enveloppe en caoutchouc circonférentiellement autour du mandrin, le mandrin est recouvert d'un apprêt puis d'un adhésif.

13. Procédé selon l'une quelconque des revendications 9 à 12, comprenant en outre :
la consolidation de chacune de la première couche du second composé d'enveloppe en caoutchouc, de l'au moins une première couche du premier composé d'enveloppe en caoutchouc, de la deuxième couche du second composé d'enveloppe en caoutchouc, de l'au moins une deuxième couche du premier composé d'enveloppe en caoutchouc et de l'au moins une troisième couche du second composé d'enveloppe en caoutchouc avant l'application sur au moins l'un du mandrin ou de la couche précédente.
